(19)

Europäisches
Patentamt
European
Patent Office
Office européen
des brevets

(11) **EP 3 173 984 A1**

(12) **EUROPEAN PATENT APPLICATION**

(43) Date of publication:
**31.05.2017 Bulletin 2017/22**

(51) Int Cl.:
**G06N 99/00** *(2010.01)*

(21) Application number: **16199404.1**

(22) Date of filing: **17.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.11.2015 GB 201520235
10.03.2016 US 201615066437**

(71) Applicant: **Servicepower Business Solutions
Limited
Stockport, Cheshire SK1 1HE (GB)**

(72) Inventors:
• **SYRICHAS, Alex
  Stockport, Cheshire SK1 1HE (GB)**
• **CRISPIN, Alan
  Stockport, Cheshire SK1 1HE (GB)**

(74) Representative: **D Young & Co LLP
120 Holborn
London EC1N 2DY (GB)**

(54) **METHODS AND APPARATUSES FOR QUANTUM ANNEALING TUNING**

(57)     A method of identifying tuned parameter values for optimising a subject set of data based on tuned parameter values for optimising a reference set of data, each of the reference and subject sets of data being for defining a data combination by associating the data within the reference or subject set of data, respectively. The method comprises identifying reference values for a set of parameters by applying a quantum annealing optimisation procedure to the reference set of data using a plurality of sets of values for the set of parameters, the set of parameters including a magnetic field, a temperature and a number of replicas parameter; identifying a reference peak cost difference corresponding to a maximum cost increase between a replaced replica and a corresponding accepted replica in accordance with a quantum annealing optimisation procedure applied to the reference set of data using the reference values for the set of parameters; determining a scaling ratio based on a ratio of one or more of the reference values for the set of parameters and of the reference peak cost difference; identifying a subject peak cost difference corresponding to a maximum cost increase between a replaced replica and a corresponding accepted replica in accordance with a quantum annealing optimisation procedure applied to the subject set of data using the reference values for the set of parameters; carrying out a tuned quantum annealing optimisation procedure for the subject set of data using tuned values for the set of parameters. The tuned value for the temperature parameter is based on the scaling ratio and on the subject peak cost difference; the tuned value for the magnetic field parameter is based on the reference value for the magnetic field parameter; the tuned value for the number of replicas parameter is equal to or more than the reference value for the number of replicas parameter; and the tuned quantum annealing optimisation procedure is configured such that the quantum coupling term is constant throughout the tuned quantum annealing optimisation procedure and is calculated based on the tuned values for the set of parameters.

START

Identify reference values {$\Gamma_{ref}$, $P_{ref}$, $T_{ref}$} with a QA optimisation for first data DATA1 — S1201

Identify a peak cost difference $\Delta E_{ref}$ for a QA optimisation of DATA1 using {$\Gamma_{ref}$, $P_{ref}$, $T_{ref}$} — S1202

Identify reference ratio k from $\Delta E_{ref}$ and from one or more of {$\Gamma_{ref}$, $P_{ref}$, $T_{ref}$} — S1203

Identify a peak cost difference $\Delta E_{subj}$ for a QA optimisation of second data DATA2 using {$\Gamma_{ref}$, $P_{ref}$, $T_{ref}$} — S1204

Carrying a modified QA optimisation for DATA2 using {$\Gamma_{subj}$, $P_{subj}$, $T_{subj}$}, with $T_{subj}$ based on k and $\Delta E_{subj}$; $\Gamma_{subj}$, based on $\Gamma_{ref}$; and $P_{subj} \geq P_{ref}$ — S1205

END

FIG. 12

**Description**

**TECHNICAL FIELD**

The present invention relates to a method, apparatus and system for tuning parameters for use in a quantum annealing-based optimisation of a set of data. This is particularly useful for, but not limited to, the Field Services Scheduling (FSS) industry where complex schedules have to be optimised.

**BACKGROUND**

When contemplating the problem of optimising a schedule (i.e. of identifying a schedule that is considered as satisfactory and/or as more satisfactory than a starting schedule), several complex and interacting aspects have to be considered. A schedule can generally be defined as a set of associations between tasks or jobs and workers, persons, groups of persons/workers or anyone/anything able to carry out a task. There can be hard constraints associated with the situation, for example, a worker may not have more than n tasks associated to them, a worker can only be associated a task if they have the minimum required skills for carrying out the task, etc. Such hard constraints define what a feasible schedule is and what an unfeasible schedule is amongst the universe of possible (feasible and infeasible) schedules: a schedule that violates at least one hard constraint will be considered an infeasible schedule while all other schedules will be considered feasible schedules. As the skilled person knows, for a schedule to be a suitable schedule, the schedule must be a feasible schedule such that the search for a suitable schedule should search for a suitable schedule amongst the feasible schedules and should not select an infeasible schedule. At the same time, the suitable schedule should attempt to optimise some aspects as much as possible. Examples of aspects that the schedule may attempt to optimise may include for example any of: a number of soft constraints violated (to be reduced), a number of consecutive tasks allocated during a worker's shift (to be increased so as to reduce the number of empty slots), an amount of overtime (to be reduced), a travel distance (to be reduced), etc. These aspects to optimise can be taken into account in one or more cost functions which should be minimised (or maximised) for the best schedules. The problem of finding a suitable schedule for a set of tasks and workers can therefore involve trying to identify a suitable feasible solution among the vast number of possible solutions for allocating the tasks to the workers, while trying to optimise one or more costs functions.

Another point which affects the complexity of identifying a suitable schedule is that neighbouring or similar schedules (schedules which are very close to each other in the allocation of tasks) may result in very different outcomes regarding costs and/or constraint violations. For example, while one schedule may not violate any hard constraint and have a relatively low cost compared to other schedules, making one minor change to this one schedule may then result in a new schedule with one or more hard constraints being violated and/or a cost suddenly increasing to an unacceptable value. As a result of this chaotic behaviour, conventional approaches for finding optimised solutions for simple problems (e.g. using dichotomy or searching for neighbours of relatively good solutions already identified) are not expected to be successful or helpful as they are expected to be more likely to miss potentially good schedules, for example schedules which may be remote from the schedules considered by the search.

Problems of this kind are classified in the domain of computation complexity theory as NP-complete and NP-hard, meaning that as the problem grows in size, the time taken to deterministically find ideal solutions increases exponentially. Consequently, for any real-life situation with different workers, tasks, hard and soft constraints and other aspects to optimise, the computing resources and time required to find the best overall schedule are far too vast to make a search of the best schedule possible or realistic. Thus, heuristic approaches are used to find useable, rather than ideal, feasible solutions within an acceptable amount of time. Such approaches stop when a good enough solution has been identified or when the search has been running for a certain amount of time and the best solution amongst the solutions searched can be identified as the best solution that could be found. These approaches are generally designed to work for a specific problem and can be difficult to adapt for a different problem. In particular, in view of the "no free lunch theorem", while a first search method may be optimised to address a specific set of problems and be expected to yield good results in a reasonable time with this set of problems, this first method may then be expected to be sub-optimal for another set of problems and a different searching method would have to be devised to optimise the identification of suitable feasible solutions to the other set of problems in a reasonable time. In view of the complexity and the nature of the search, even with the vast computing capabilities now available in computers and computer systems, an exhaustive search is clearly out of reach and while a computer implementation for such a search is considered as being essential for attempting to identify a suitable feasible solution in a reasonable amount of time, it is considered desirable to identify any means by which the computer implementation of such a search can be accelerated and/or simplified. In particular, metaheuristic methods for trying to identify a suitable solution to a problem generally involve one or more parameters and, depending on the parameters' values used, the efficiency and success rate of the methods may be affected. It can therefore be beneficial to try to identify which parameters to use with a view to reaching an optimal or near-optimal solution for a problem more efficiently. On the other hand, the search for parameters can also be very complex and thus can be time consuming. In other words, not only the attempts to find a suitable solution for a problem can take a considerable amount of time but also attempts to find tuned parameters with a view to speeding up the search for a suitable solution can also take a significant amount of time. Identifying parameters' values which are well adapted or expected to be well-adapted for identifying a solution to a problem efficiently can thus also accelerate the search for a suitable solution.

In other words, due to the difficulties that are faced when trying to improve a search for a suitable schedule, any improvements in the efficiency of the identification of suitable feasible schedules are generally challenging to identify, whether they are focussed on the method and its implementation and/or on how to parameter them. Also, in view of the complexity of such systems and of the exponential increase for any additional factor added, any such improvements can translate in very significant improvements in the time needed to find a suitable feasible solution and/or in the computing resources required for identifying a suitable solution.

## SUMMARY

The invention is defined by the appended claims.

According to a first example of the present disclosure, there is provided a method of identifying tuned parameter values for optimising a subject set of data based on tuned parameter values for optimising a reference set of data, each of the reference and subject sets of data being for defining a data combination by associating the data within the reference or subject set of data, respectively, the method comprising: identifying reference values for a set of parameters by applying a quantum annealing optimisation procedure to the reference set of data using a plurality of sets of values for the set of parameters, the set of parameters including a magnetic field, a temperature and a number of replicas parameter; identifying a reference peak cost difference corresponding to a maximum cost increase between a replaced replica and a corresponding accepted replica in accordance with a quantum annealing optimisation procedure applied to the reference set of data using the reference values for the set of parameters; determining a scaling ratio based on a ratio of one or more of the reference values for the set of parameters and of the reference peak cost difference; identifying a subject peak cost difference corresponding to a maximum cost increase between a replaced replica and a corresponding accepted replica in accordance with a quantum annealing optimisation procedure applied to the subject set of data using the reference values for the set of parameters; carrying out a tuned quantum annealing optimisation procedure for the subject set of data using tuned values for the set of parameters. In this method, the tuned value for the temperature parameter is based on the scaling ratio and on the subject peak cost difference; the tuned value for the magnetic field parameter is based on the reference value for the magnetic field parameter; the tuned value for the number of replicas parameter is equal to or more than the reference value for the number of replicas parameter; and the tuned quantum annealing optimisation procedure is configured such that the quantum coupling term is constant throughout the tuned quantum annealing optimisation procedure and is calculated based on the tuned values for the set of parameters. Accordingly, it is expected that when data from a second set of data is to be combined (associating data entries in the data set with each other) in a data combination, sometimes also referred to as schedule, it can be combined in a more efficient and successful manner using tuned parameters determined for combining (optimising) a first set of data, thereby raising the quality of the data organised in a data combination (measured by a cost function) and/or reducing the time for reaching the same level of quality. In other words, the method is considering a situation for optimising a subject and reference sets of data, wherein said optimisation comprises identifying a data combination for the subject or reference set of data, respectively, which optimises a cost function.

In one example, for each of the reference and subject sets of data: the set of data comprises vehicle data identifying a fleet of one or more vehicles; driver data identifying one or more drivers; and location data defining one or more locations to be visited; and a data combination associating the data within the set of data defines one or more routes wherein, for each of the one or more routes, a vehicle of the one or more vehicles is associated with at least one of the one or more drivers and with a sequence of at least one of the one or more locations to be visited by the vehicle. These situations can sometimes be referred to as vehicle scheduling wherein the main aim is to define a route for one or more vehicles to visit one or more locations.

In another example, for each of the reference and subject sets of data: the set of data comprises workforce data identifying one or more workers; time period data defining one or more time periods and task data defining one or more tasks to be carried out; and a data combination associating the data within the set of data defines associations between the workforce, time period and task data allocating, for at least one of the one or more time periods, at least one of the one or more workers to at least one of the one or more tasks. These situations can sometimes be referred to as field service scheduling wherein different workers (e.g. technicians) are being allocated different tasks, the allocations being also for a specific time slot (e.g. one or more time periods).. Other aspects may also be relevant in some examples, such as the skills of the workers, overtime, etc.

In some examples, the quantum annealing optimisation procedure applied to the reference set of data using the reference values for the set of parameters may be the same quantum annealing optimisation procedure as the quantum annealing optimisation procedure applied to the reference set of data using a plurality of sets of values for the set of parameters.

In one example, identifying the reference peak cost difference may comprise identifying, as the reference peak cost difference, the maximum value for each instance of a cost increase between a replaced replica and a corresponding accepted replica in accordance with the quantum annealing optimisation procedure applied to the reference set of data using the reference values for the set of parameters.

In another example, identifying the subject peak cost difference comprises identifying a maximum value for the lower $n^{th}$ percentile of the set of cost difference values comprising the cost difference value for each instance of a cost increase between a replaced replica and a corresponding accepted replica in accordance with the quantum annealing optimisation procedure applied to the reference set of data using the reference values for the set of parameters, wherein n is selected as one or more of: 80, 85, 90, 95, 98 or less than or equal to 99. Accordingly, extreme values which may be considered as non-representative can be ignored.

In some examples, identifying the subject peak cost difference may comprise: identifying a maximum value amongst a set of subject cost increases, wherein the set of subject cost increases is selected as cost increases smaller than or equal to the reference peak cost difference multiplied by a factor, from all instances of cost increase between a replaced replica and a corresponding accepted replica in accordance with the quantum annealing optimisation procedure applied to the reference set of data using the reference values for the set of parameters. For example, the factor may be one or more of: 0.5; 0.75; 1; 2; less than or equal to 1; and less than or equal to 0.5. Accordingly, extreme values which may be considered as non-representative can be ignored.

Alternatively or additionally, some extreme values identified for the cost increase values in the set of subject cost increases may be ignored by only considering the lower nth percentile of values (see for example the above discussion of the $n^{th}$ percentile for the reference peak cost difference).

In some examples, the scaling ratio may be selected as the reference value for the number of replicas parameter multiplied by the reference value for the temperature parameter and divided by the reference peak cost difference.

In one example, the tuned value for the temperature parameter may be selected as the scaling ratio multiplied by the subject peak cost difference. For example, the tuned value for the number of replicas parameter may be selected to greater than and not equal to the reference value for the number of replicas parameter and/or the tuned quantum annealing optimisation procedure may be configured such that, in a Hamiltonian calculation for determining whether to replace a first replica with a second replica, a difference in costs between the first and second replicas is not averaged by the number of replicas parameter.

In another example, the tuned value for the temperature parameter may be selected as the scaling ratio multiplied by the subject peak cost difference and divided by the tuned value for the number of replicas parameters.

According to a further example of the present disclosure, there is provided a method of dispatching drivers. The method comprises identifying a first fleet of one or more vehicles; first one or more drivers; and first one or more locations to be visited; generating a first set of data comprising vehicle data representing the first fleet of one or more vehicles; driver data representing the first one or more drivers; and location data representing the first one or more locations to be visited; identifying a second fleet of one or more vehicles; second one or more drivers; and second one or more locations to be visited; generating a second set of data comprising vehicle data representing the second fleet of one or more vehicles; driver data representing the second one or more drivers; and location data representing the second one or more locations to be visited; identifying a set of tuned parameter values for optimising the second set of data based on tuned parameter values for optimising the first set of data using the any of the method discussed above in respect of the first aspect, wherein carrying out the tuned quantum annealing optimisation procedure for the second set of data comprises outputting an optimised data combination associating data within the second set of data; and dispatching the second one or more drivers, using the second fleet of one or more vehicles and to the one or more locations based on the output optimised data combination for the second set of data. In this example, it is expected that the steps of the method relating to the first aspect of the disclosure will be implemented on a computer system before the driver can actually be dispatched to the selected locations based on the output optimised set of data. Accordingly, not only can the data processing (for determining what is considered as an optimal data combination for the second set of data) be made more efficient thereby improving for example the operation of a computer system that may implement these features, but the schedule itself for dispatching drivers can be optimised more quickly thereby resulting in a more efficient schedule. As the cost function can take into account the distance travelled by the drivers, by optimising the schedule, a smaller overall distance can be travelled by the drivers thereby reducing the overall fuel consumption for carrying out the schedule (e.g. to carry out one or more tasks at each of the locations). As a result, by dispatching drivers in accordance with the present disclosure, the fuel efficiency can be improved and the utilisation time of the vehicles can be decreased to arrive at the same results as before.

According to a second example of the present disclosure, there is provided a transitory or non-transitory computer readable medium having stored thereon instructions for identifying tuned parameter values for optimising a subject set of data based on tuned parameter values for optimising a reference set of data, each of the reference and subject sets of data being for defining a data combination by associating the data within the reference or subject set of data, respectively, the medium comprising machine executable code which when executed by a processor, causes the processor to perform steps to and that comprise: identify reference values for a set of parameters by applying a quantum annealing optimisation procedure to the reference set of data using a plurality of sets of values for the set of parameters, the set of parameters including a magnetic field, a temperature and a number of replicas parameter; identify a reference peak cost difference corresponding to a maximum cost increase between a replaced replica and a corresponding accepted replica in accordance with a quantum annealing optimisation procedure applied to the reference set of data using the reference values for the set of parameters; determine a scaling ratio based on a ratio of one or more of the reference values for the set of parameters and of the reference peak cost difference; identify a subject peak cost difference corresponding to a maximum cost increase between a replaced replica and a corresponding accepted replica in accordance with a quantum annealing optimisation procedure applied to the subject set of data using the reference values for the set of parameters; carry out a tuned quantum annealing optimisation procedure for the subject set of data using tuned values for the set of parameters. The tuned value for the temperature parameter is based on the scaling ratio and on the subject peak cost difference; the tuned value for the magnetic field parameter is based on the reference value for the magnetic field parameter; the tuned value for the number of replicas parameter is equal to or more than the reference value for the number of replicas parameter; and the tuned quantum annealing optimisation procedure is configured such that the quantum coupling term is constant throughout the tuned quantum annealing optimisation procedure and is calculated based on the tuned values for the set of parameters.

According to a third example of the present disclosure, there is provided a transitory or non-transitory computer readable medium having stored thereon instructions for identifying tuned parameter values for optimising a subject set of data based on tuned parameter values for optimising a reference set of data, each of the reference and subject sets of data being for defining a data combination by associating the data within the reference or subject set of data, respectively, the medium comprising machine executable code which when executed by a processor, causes the processor to perform steps according to any of the methods discussed above in respect of the first example of the present disclosure.

According to a fourth example of the present disclosure, there is provided a process optimisation computing device, comprising: one or more processors; a memory coupled to the one or more processors which are configured to be capable of executing programmed instructions stored in the memory to and that comprise: identify a reference peak cost difference corresponding to a maximum cost increase between a replaced replica and a corresponding accepted replica in accordance with a quantum annealing optimisation procedure applied to the reference set of data using the reference values for the set of parameters; determine a scaling ratio based on a ratio of one or more of the reference values for the set of parameters and of the reference peak cost difference; identify a subject peak cost difference corresponding to a maximum cost increase between a replaced replica and a corresponding accepted replica in accordance with a quantum annealing optimisation procedure applied to the subject set of data using the reference values for the set of parameters; carry out a tuned quantum annealing optimisation procedure for the subject set of data using tuned values for the set of parameters. The tuned value for the temperature parameter is based on the scaling ratio and on the subject peak cost difference; the tuned value for the magnetic field parameter is based on the reference value for the magnetic field parameter; the tuned value for the number of replicas parameter is equal to or more than the reference value for the number of replicas parameter; and the tuned quantum annealing optimisation procedure is configured such that the quantum coupling term is constant throughout the tuned quantum annealing optimisation procedure and is calculated based on the tuned values for the set of parameters.

According to a fifth example of the present disclosure, there is provided a process optimisation computing device, comprising: one or more processors; a memory coupled to the one or more processors which are configured to be capable of executing programmed instructions stored in the memory to and which are for performing any of the methods discussed above in respect of the first example of the present disclosure.

According to a sixth example of the present disclosure, there is provided a computer program configured to perform, when executed, the any of the methods discussed above in respect of the first example of the present disclosure.

## BRIEF DESCRIPTION OF THE DRAWINGS

Examples of the disclosure will now be described with reference to the accompanying drawings, throughout which like parts may be referred to by like references, and in which:

Figure 1 is a simplified class diagram illustrating the structure of a replica in accordance with an example of the present disclosure;

Figure 2 illustrates an encoded schedule in accordance with an example of the present disclosure;

Figures 3-6 illustrate examples of technicians, constraints, tasks and of a possible corresponding encoded schedule in accordance with an example of the present disclosure;

Figure 7 illustrates a conceptual view of the Ising Model for field service scheduling in accordance with an example of the present disclosure;

Figure 8 is a flowchart illustrating example initialisation steps for running a quantum optimiser in accordance with an example of the present disclosure;

FIGS. 9-10 are flowcharts illustrating example steps for carrying out a quantum optimisation in accordance with an example of the present disclosure;

Figure 11 shows examples of plotting the effective temperature PT value against the corresponding success rate of a QA-based optimiser;

Figure 12 illustrates an example method for tuning parameters for optimising a set of data based on tuning parameters for optimising another set of data;

Figure 13 illustrates four examples of plotting of relative costs for sampled replicas explored while running a QA optimiser;

Figure 14 illustrates an example of plotting (of the same data but at two different scales) of relative costs for sampled replicas explored and accepted by a QA optimiser;

Figure 15 illustrates a subset of a table used for generating the plotting graphs of Figure 13;

Figures 16A-16E schematically represent steps carried out by a modified QA-based optimiser in accordance with the present disclosure.

Figure 17 shows example(s) of plotting the effective temperature PT value against the corresponding success rate of a modified QA-based optimiser according to an example of the present disclosure;

Figures 18-19 are illustrations of example architectures for implementing an optimiser in accordance with an example of the present disclosure;

Figure 20 is an example of a computing device in accordance with an example of the present disclosure.

## DETAILED DESCRIPTION

Various embodiments are described more fully below with reference to the accompanying drawings, which form a part hereof, and which show specific examples and example embodiments. However, embodiments may be implemented in many different forms and should not be construed as limited to the examples as described herein.

Generally, the present disclosure is directed to using a metaheuristic optimisation, for example using a computer program, which simulates a quantum tunnelling effect to optimise a schedule such as a schedule used within the FSS industry. More specifically, the present disclosure discussed several techniques and possible implementations with a view to improving the speed and computing efficiency of the search for a suitable schedule.

Conventionally, existing metaheuristic optimisation methods involve searching for feasible schedules which minimise a cost function for schedules and an example of an existing metaheuristic optimisation method is a Simulated Annealing (SA) algorithm. In terms of background, a cost function may be affected by several aspects and can be defined on a case by case basis depending for example on the type of schedules considered and on the actual use of the schedules. For example, it can take into account: a technician/worker salary (one technician might be paid less than another and that could lower the cost value if assigned a particular job); a travel time (short distances would generally lower the cost value for example both in terms of providing a reduced operational running cost and in terms of increasing the time available for carrying out tasks and thus the overall efficiency); job priority (if higher priority jobs are serviced first, the cost value may be lower); overtime (if the amount of overtime is reduced, the cost would be expected to decrease as well). These cost aspects could also have a 'weighting' term applied to them. The weighting may be determined as deemed appropriate, for example salary may be more important to schedules with a smaller workforce so the weighting may then be higher. In contrast, larger businesses with a larger workforce may be able to benefit from economies of scale, and a lower weight may then be used. Returning to the SA algorithm, while the SA optimisation process can yield reasonably good results, it is expected that in the FSS industry, its results can be yet further improved. On the other hand, the Quantum Annealing (QA) algorithm is a new metaheuristic optimisation algorithm that has recently been identified and which has, at this stage, mainly been discussed in a theoretical context. An example of such an academic paper is "Quantum annealing algorithm for vehicle scheduling" [1] which considers the application of a QA optimisation to a simplified VRP problem. The use of QA optimisation is expected to yield good results in the scheduling, and in particular the FSS, field for example because the QA optimisation is expected to be more efficient in a context where the cost function can present high peaks between local minima or high "walls" around a local minimum solution -which are harder for an SA optimiser to avoid as the temperature parameter goes down- due to the "tunnelling effect" which makes a QA optimiser more likely to travel across a high wall or a high peak to reach neighbouring solutions. In other words, in an environment where the cost function can present abrupt changes, an SA optimiser is more likely to get stuck around a local minimum after some time while a QA optimiser is expected to still be able to consider and assess schedules further away from the local minimum. It is therefore expected that QA optimisers will perform better than SA optimisers for identifying schedules, for example in the FSS industry. However, this type of optimiser requires a large number of calculations based on a large amount of data such that the time and computing resources involved are important and any effort to reduce the calculation time and/or complexity can be beneficial and can have a considerable knock-on effect on the overall running time and/or efficiency of the optimiser. As the skilled person will understand, any simplification of a QA optimiser can translate in one of or any combination of (i) a reduction in running time, (ii) a reduction in the computing resources required and (iii) an efficiency of the optimiser. For example, by optimising the identification of a schedule with a QA optimiser, the QA optimiser can run with the same configuration and computing resources, e.g. hardware, in a shorter amount of time (item (i)); or it can run with the same configuration and in the same amount of time but using less computing resources (item (ii)) which can free up resources; or it can run with a more complex configuration, e.g. using more loops and/or schedules, etc., in the same amount of time and using the same computing resources. These three benefits, or any other possible benefits that can be derived from optimising the QA optimiser, can also be combined together as appropriate. Such improvements or optimisations of the QA optimiser will be referred to herein as relating to the efficiency of the optimiser -and the skilled person can then translate these efficiency gains however they see fit depending on their needs or requirements.

Often in the Field Service industry, a schedule is usually formulated with the aim of achieving: maximal utilization of a workforce; improved service levels; reduced resource consumption; and minimised service costs. A schedule can refer to a scheduling or assignment of tasks or jobs to one or more persons or workers (e.g. technicians and/or drivers, etc.) for a time period or time and taking into account one or more hard and/or soft constraints. In one example, a workforce consisting of 30 service technicians are to be assigned 300 tasks of varying durations over a 10 day scheduling horizon, with each task requiring the singular or combined application of 20 different skills. This example is further complicated by the requirement that the schedule must also adhere to a set of 20 hard and soft constraints. In this context, generating an "optimised" schedule -that is, a schedule which is expected to be one of the best possible feasible schedules for assigning tasks to individuals or which is a good enough feasible schedule can in some cases involve comparing a vast number of possible schedules so as to select one believed to be the best or one of the best ones. As a result and as mentioned before, such optimisation is typically carried out by a heuristic program on a computer because of the complexity and combinatorial nature of scheduling. The number of configurations a schedule can take grows exponentially even for only modest increases in the number of tasks or service technicians. As such, it is infeasible to perform an exhaustive search for the best possible formulation of a real-world schedule. Clearly, optimising this schedule selection or identification is a non-trivial endeavour which is thus generally implemented on a heuristic program on a computer. In the case of a QA optimiser, while the use of a QA optimisation process has been mentioned in the context of a simplified VRP problem, the scalability of such an academic approach for identifying a schedule in a more complex environment is questionable. For example, in a FSS environment, a much larger number of tasks, workers, hard constraints, soft constraints and cost parameters are involved where each affects the suitability of a schedule both individually and in combination with the other elements. Previous patent applications have been filed on the subject of improving the efficiency of the identification of a suitable solution using a QA optimisation process, namely United Kingdom patent applications GB 1515317.4, GB 1515318.2 and GB 1515319.0 filed 28 August 2015. The content of each of these applications is incorporated herein by reference.

The heuristic which is central to QA optimisation is inspired by the quantum tunnelling phenomenon described in the scientific field of Quantum Mechanics. This tunnelling effect is simulated and utilised to make determinations about what are good, and what are poor but promising schedules. This can be better understood with reference to "Brief description on the state of the art of some local optimisation methods: Quantum annealing" [2] and reference [1]. In the interest of simplification, this optimisation can be viewed as taking a subset of all possible schedule configurations as input, which represents different possible solutions. Each member or solution can then be repeatedly reformulated in reference to a "goodness" value and to each other (using for example interactions between solutions). In this context, a "goodness" value can for example be derived from a difference in costs between a current schedule or solution and a candidate schedule. Under suitable conditions and with enough time, this ensemble is expected to improve statistically, containing better configurations. During this process, 'connections' between members or solutions are continuously created and broken. Such connections are made when members exhibit similar states or features. When enough similarity exists, the members can 'tunnel' along this connection and acquire or 'fix in' the features or states of another member. Viewed from a different perspective, when enough connections or similarities exist between solutions, a conceptual 'tunnel' can be formed, through which the states/features of one solution can be transmitted to, or can affect, another. As a result, the more similarities there are between solutions, the greater is the chance of replacing one solution with another. In other words, short-cuts can be taken (by simulating a quantum tunnelling effect) to arrive at schedule configurations which would ordinarily be unreachable (for example using a conventional comparison with a neighbour), or which would require a much longer sequence of operations to reach.

To simulate the quantum tunnelling effect and to improve the efficiency of the application of the quantum algorithm for optimising schedules, it is herein discussed different ways in which the QA optimiser can be configured and/or applied in practice, wherein these are specifically provided for scheduling optimisation and in particular for computer implemented optimisations and optimisers. An example of a QA optimiser and QA optimising process will now be described in more detail wherein, in this example, several of the different teachings discussed herein are all implemented in this single example. However, it will be clear from the discussion in the present disclosure in its entirety that at least some of these teachings can be provided independently from the others and/or as optional additions to the others.

While it is running, a QA optimisation process will carry out operations (multiplication, summing, etc.) between the spins of the different one or more replicas used by the process, wherein a spin can be in one of two opposite states "+1" or "-1" (representing a spin state in physics when continuing with the quantum physics analogy). It is noteworthy that a "replica" does not refer to an identical copy of another element but is used to refer to one of a set of elements which is processed by the QA optimiser. Typically, a QA optimiser will run on a set of P replicas, with P≥3, corresponding to P schedules and the sets of P replicas and schedules are expected to improve over time, as mentioned above. A schedule, i.e. a set of associations between tasks and workers at certain times, can be represented using +1/-1 with a view to being able to be processed by an actual optimiser. In the context of a QA optimisation, P replicas representing or associated with P schedules in this manner could then be input into the QA optimiser which is then expected to help identify a suitable schedule. While the use of such a QA optimiser can be expected to facilitate or improve the identification of suitable schedules compared to non-QA optimisers, any advances that can be made in or provided for increasing the efficiency of an actual computer implementation of the optimiser can provide significant savings in computing resources and/or time required to identify a suitable schedule. It is discussed herein how the efficiency of the computer implementations of such a QA optimiser may be further improved using one or more of the following techniques, wherein these teachings are directed to the specific problems faced when implementing a QA-type optimiser (which relies on a very different logic and approach compared to other optimisers) and when implementing this specific type of optimiser using a computing device (which again comes with a range of limitations which can affect the efficiency of the optimiser).

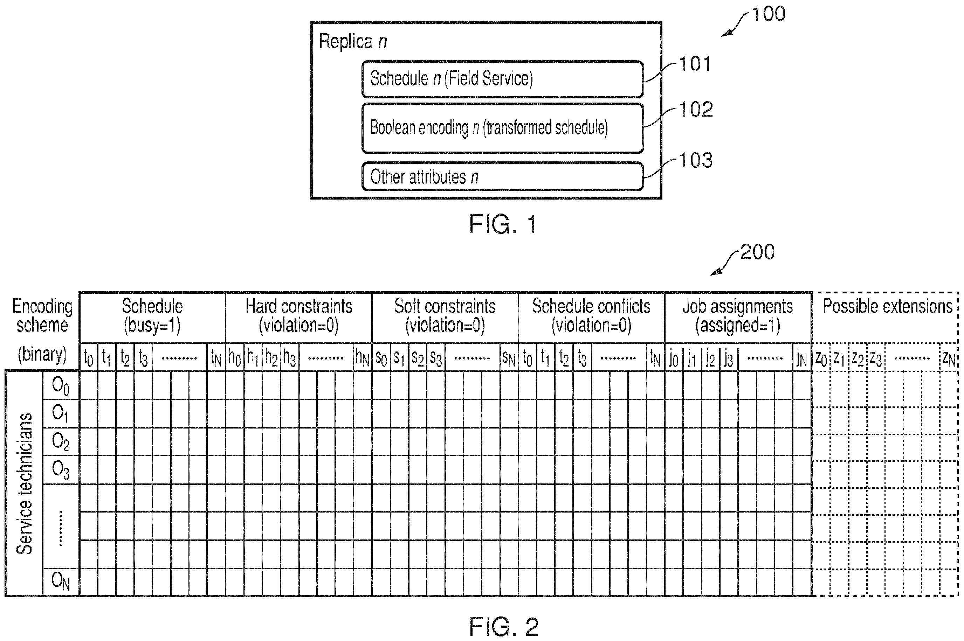

An example of how a QA optimisation may be run will now be discussed with reference to Figures 1-8. In this illustrative example, and starting with Figure 1, a replica 100 includes at least two portions: a schedule portion 101 and a (Boolean) encoding portion 102. Generally the term encoding is used herein to refer to a data structure encoding a schedule, e.g. encoding schedule data corresponding to a schedule. The replica 100 may also optionally include an additional "other attribute portion" 103 if appropriate. Typically the schedule portion 101 comprises the actual schedule to which the replica relates, i.e. the associations of tasks to the workforce, while the encoding portion 102 comprises a data item or encoding for -and derived from- at least part of the schedule. The encoding portion is the portion that is actually passed through the QA optimisation loop, that is, it is the portion that represents spins in a +1/-1 state and which can interact with each other in a QA optimisation. Depending on the context, in this or other documents, "replica" can sometimes refer to this encoding portion 102 only while in other cases a replica can refer to both the schedule and the data item that encodes at least a part of the schedule. In this example, the schedule encoding is a Boolean encoding, however in other examples the encoding may not be a Boolean encoding, as will be clear from the discussion below.

Returning to the metaphor with quantum physics from which the QA optimisation originates, this quantum model describes a lattice of interacting 'spins' which can each take the value {-1, +1}. The lattice is subjected to a magnetic field at a very low temperature. At each site of the lattice, the spin value is recalculated using a function of the field, the temperature, and the interaction of neighbouring spins. As the field is decreased, the lattice undergoes a phase change wherein the spins tend to become 'aligned' and consequently place the entire system in a low energy state. In this parallel between scheduling optimisation and quantum physics, a low energy state for the entire system corresponds to a low cost for the entire schedule.

In this example, while the encoding includes at least a portion derived from the schedule itself, the encoding also includes additional information which does not represent the schedule as such. The additional information is derived from the schedule and additional parameters relevant to the identification of a suitable schedule, such as hard constraint information for the schedule although in other examples this additional information may be omitted.

Figure 2 illustrates an example encoding or data item 200 which encodes a schedule in accordance with an example of the present disclosure. In this example the encoding 200 is represented as a table with rows corresponding to workers and the columns corresponding to different sub-sections of the encoding. While this has been represented as a table, this can in other examples be, or be represented as, a one-dimensional array or in any other suitable form or using any suitable data structure. For the sake of clarity this has been arranged logically as a table in the example of Fig. 2. For each worker, the table provides attributes which, given the business application considered each time, are to be optimised for. As this example uses a binary encoding, each cell of this table can assume a binary value {0, 1} which simulates the {-1, +1} spin (following the quantum physics metaphor, the spin is for the spin at each site of the lattice in the Ising Model).

The encoding of Fig. 2 comprises:

- a first schedule portion which indicates whether the workers are busy (i.e. have been allocated a task) at a time or during a time period. In this example this is done by having all of the relevant times or time periods as columns and, for each column (time or time period) and for each row (worker), a 0/1 value indicates whether the worker is available/busy at this time or during this time period.
- a hard constraints portion which indicates whether any hard constraint is violated by the task allocations in the schedule. In this example this is done by having all of the hard constraints as columns and, for each column (hard constraint) for each row (worker), a 0/1 value indicates whether the task allocations for the worker violate this hard constraint. For example, 0 indicates a violation of the hard constraint while 1 indicates that the hard constraint is satisfied.
- a soft constraints portion which indicates whether any soft constraint is violated by the task allocations in the schedule. In this example this is done by having all of the soft constraints as columns and, for each column (soft constraint) for each row (worker), a 0/1 value indicates whether the task allocations for the worker violate this soft constraint. For example, 0 indicates a violation of the soft constraint while 1 indicates that the soft constraint is satisfied.
- a schedule conflict portion which indicates whether the task allocations in the schedule include any conflicting associations, that is if any worker has been allocated more than one task for the same time or time period. In this example this is done by having all of the time or time periods as columns and, for each column (time/time period) for each row (worker), a 0/1 value indicates whether the worker has been allocated more than one tasks for this time or time period. For example, 0 indicates a conflict in the task allocation while 1 indicates that the task is not causing any conflict at this time / for this time period and for this worker.
- a job assignment portion which indicates whether a task has been allocated to a worker. In this example this is done by having all of the tasks as columns and, for each column (task) for each row (worker), a 0/1 value indicates whether the worker has been allocated this task.

The encoding 200 may further include any number of additional sections or portions as deemed necessary or appropriate (see the "possible extension" section in dashed line in Fig. 2), for example taking into account any element or parameter or combination thereof that may affect the cost of a schedule and/or whether the schedule violates any constraints. For example, the schedule could include an additional portion relating to the salary range or charging rate of the worker. The salary or charging rate associated with a worker involved in carrying out a task can also affect the outcome of the cost function for the schedule such that it is one of the parameters that will affect how to optimise the selection of a suitable feasible schedule as well. In other examples the encoding 200 may also include less information and may for example not include any hard or soft constraint information.

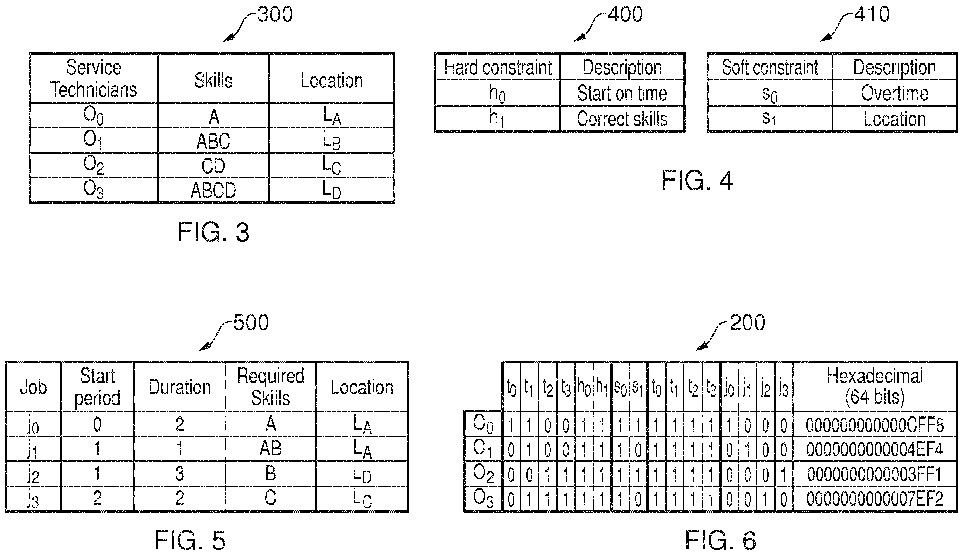

FIGS. 3-6 illustrate examples of technicians, constraints, tasks and of a possible corresponding encoded schedule in accordance with the present disclosure. Figure 3 illustrates an example of worker data 300 which identifies, for each worker, their set of skills and their location. Figure 4 illustrates examples of hard constraint data 400 and soft constraint data 410 which identifies hard and soft constraints for the allocation of tasks, respectively. In this example, the hard constraint data identifies two hard constraints: a first hard constraint that a task must start on time and a second hard constraint that the worker carrying out the job/task must have the appropriate set of skills required for carrying out the task. It is noteworthy that these are only illustrations and, in other examples, a different set of hard constraints may be used. For example, hard constraint h0 of hard constraint data 400 may in other examples be considered a soft constraint only which would be tried to be met but which does not render a schedule infeasible if violated. The hard and soft constraint data can be defined depending on the situation at hand and depending on the requirements identified for the task allocation situation under consideration. The soft constraint data 300 of the example of figure 2 identifies two soft constraints, a first soft constraint that overtime should be avoided and a second soft constraint that the location of the worker and of the task should be the same, if possible. While these soft constraints will not render a schedule infeasible, they can affect the output of the cost function of a schedule as a worker doing overtime or travelling over longer distances can increase the operational costs of and/or the efficiency of actually carrying out the schedule.

Figure 5 illustrates an example of task data 500 which identifies a set of tasks to be allocated to the workers. In this example, each task is associated with a specific start time period, duration, set of skill requirements and location.

In this example, only four time periods $t_0$-$t_3$ are considered. Finally, Figure 6 is an illustration of data encoding a schedule 200 for allocating the tasks of the task data 500 to the workers defined in workforce data 300 for the relevant time four periods, wherein each cell or entry in the table provides information relevant to the portion it is in. This encoding illustrates the schedule which consists in the allocation of task $j_0$ (corresponding to $t_0$-$t_1$) to worker $O_0$, task $j_1$ (corresponding to $t_1$) to worker $O_1$, task $j_2$ (corresponding to $t_1$-$t_3$) to worker $O_3$ and task $j_3$ to worker $O_2$. As a result, the scheduling entry for worker $O_0$ at $t_1$ include "1" because the worker has been allocated a task ($j_0$) at this time while the entry for the same worker at $t_2$ comprises "0" because the worker has not been allocated any task at this time. While the encoding 200 comprises a schedule portion and a job assignment portion, which both reflect the actual schedule i.e. the allocation of tasks to the worker, the encoding 200 further comprises information derived from the schedule but not directly reflecting the content of the schedule. In other words, these portions do not reflect the allocation of task to the workforce, i.e. the schedule that is to be optimised, but reflect additional information that can be relevant to the optimisation of the schedule. That is, the encoding 200 of Figure 6 comprises a hard constraint portion, a soft constraint portion and a conflict portion which contain additional information which does not represent the schedule i.e. which does not represent information relating directly to the allocation of tasks to a workforce. Figure 6 also illustrates how the encoding data for each worker can be represented as a single variable, here represented as a 64 bits hexadecimal value. In other examples, the entire table could be represented as a single array "1100111111111000010011101111010000111111111100010111111011110010" in this example, which can also be represented in any suitable notation, e.g. a hexadecimal notation. This additional section has been included in figure 6 for the sake of completeness only and does not form part of the encoding 200 as such.

In the example of Figure 6, the schedule can be fully reconstructed from the encoding 200. However, in other examples it may not be possible to uniquely identify the original schedule used for generating the encoding. Where the schedule may be fully and uniquely obtainable from the encoding, it may be decided that it is not appropriate to store the schedule 101 with the encoding 102 (200) of replica 100, for example with a view to reducing the amount of data to be processed, or it may be decided to include the schedule 101 in the replica 100 as it may be used for quick access to the schedule (without prior reconstruction for example) and/or for quick modification of the schedule when needed. In other words, it may sometimes be quicker to include the schedule 101 in the replica 100 so that it can be quickly retrieved and referenced, even when it is theoretically not required in replica 100. Where the schedule may not be fully obtainable from the encoding 200, it may be decided to include the schedule 1001 in the replica so as to have quick access to the schedule associated with the encoding 102, or it may be decided that it may be more appropriate to store the schedule 101 elsewhere so long as the schedule associated with the encoding can be retrieved (e.g. the other attribute data 103 may be used to include a reference to the schedule or to how to/where to find the schedule associated with the replica 100 and encoding 102).

In one example, the encoding for the schedule (comprising the additional information as per the discussion above or not) can be a binary encoding which further facilitates the application of a quantum annealing optimisation for simulating the quantum tunnelling effect in scheduling in an actual computer-implemented optimiser. Therefore, while some encodings 200 can comprise "spin" entries, in other examples other encodings 200 can comprise binary entries with a view to enhancing the implementation of the QA optimiser.

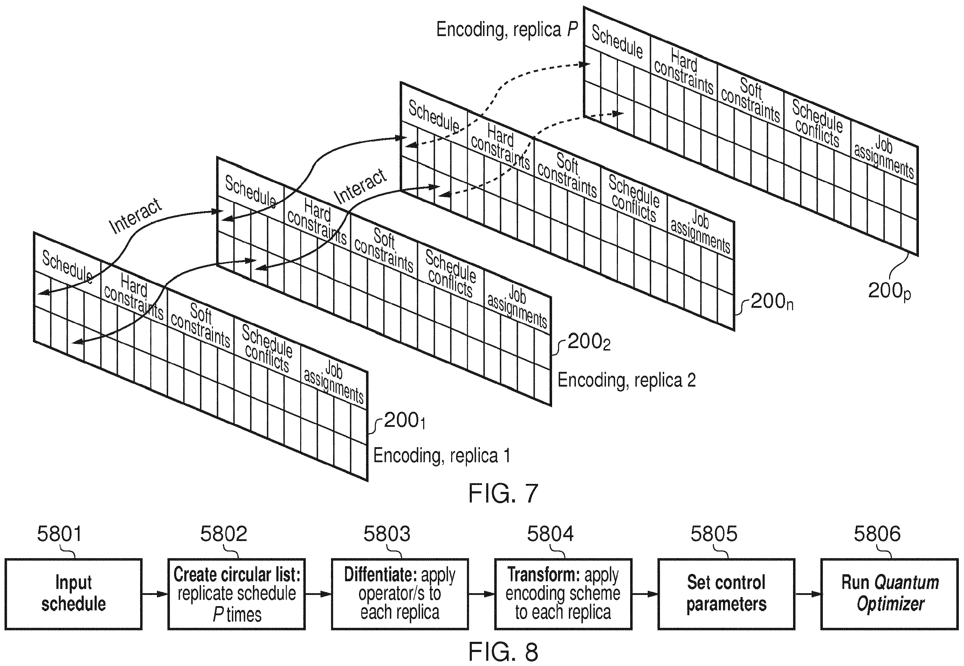

In an implementation of a QA optimiser in accordance with the present disclosure, for the optimiser to process the schedule data to identify a suitable or likely to be suitable schedule, three or more P encodings are arranged into a list, preferably a circular list. This arrangement list is shown in Figure 7. Modifications can be made to the schedule and/or encodings and interactions occur between corresponding cells of different encodings $200_1$-$200_P$ in the list. In one example, the encoding $200_n$ for a replica n will interact with the encoding for the previous encoding $200_{n-1}$ in the list and with the next encoding $200_{n+1}$ in the list.

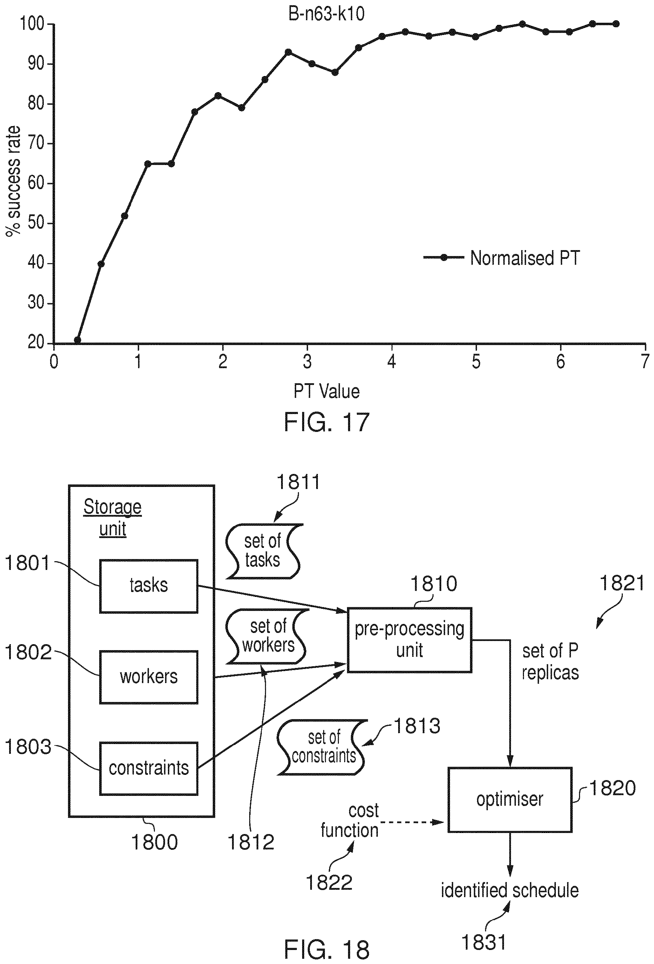

Figure 8 is a flowchart illustrating example initialisation steps for running a quantum optimiser in accordance with an example of the present disclosure. While the optimiser generally refers to the element carrying out the QA optimisation process (S806) with a view to identifying a feasible and suitable schedule, the initialisation steps (S801-S805) can be carried out by a pre-processing unit, for example part or all of a process optimization computing device, which is configured to prepare the data to be input into the optimiser with a view to providing data in a manner designed for the optimiser with a view to having the optimiser operating efficiently. In some examples, the pre-processing unit may be part of the optimiser while in other examples they may be separate logical and/or physical elements (see for example the discussion of Figure 18 below).

Returning to Figure 8, at S801, a schedule is input, wherein the schedule has been generating based on the set of task and workforce to be associated (taking into account the relevant time period) for finding a suitable schedule. This initial schedule can for example be created using a separate booking system, into which requests for visits by service technicians can be entered. For example, a customer may make a telephone call or send an email to the booking system operator, requesting that a service technician visit their site, within some preferred time-frame, to service or repair equipment and this can be included in the list of tasks to be carried out, wherein the initial schedule is generated based at least in part on this set of tasks. Then at step S802, a list (which can be viewed as a contiguous array of distinct memory structures) of replicas is created and placed in the memory of the pre-processing unit. In this example, the list is created using a copy or replication of the initial schedule input at S801 but in other examples different replicas (corresponding to different schedules) can be used in the list when it is created. The first and last replicas can then be linked to form a logically circular list such that, for the last replica in the list, the "next" replica is the first replica of the list and, for the first replica in the list, the "previous" replica is the last replica of the list. In other examples the list is not a circular list and may even not be provided as a list but as an array or equivalent structure and the identification of the previous/next replica for each replica in the structure can then be identified accordingly as known in the art. In the interest of conciseness and of simplification of the discussion only, the following discussion will now refer to a circular list. The number of replicas P in this list can be determined by the available computational resources (such as RAM, CPU cache/clock) balanced against the business requirements (running time, scheduling horizon), and can for example be selected in the range 40-3000. A larger value for P (i.e. a higher number of replicas processed by the optimiser) can result in using a larger amount of computing resources but in an increased likelihood of identifying a better schedule while a smaller value for P (i.e. fewer replicas) can result in using less computing resources but with the trade-off of being more likely to obtain worse results in terms of schedule optimisation. As previously mentioned with respect to Figure 1, in this example each replica 100 comprises a schedule; a Boolean encoding representing the contained schedule as transformed by the encoding scheme discussed with reference with Figures 1-7 above and, optionally, other attributes.

At S803, the replicas in the circular list are differentiated or diversified from one another. While this step is not required as such for the optimiser to carry out the optimisation, it has been found that by generating a list having replicas for different or diversified schedules, the optimiser can on average use less computing resources to identify a suitable schedule. In this example this is performed by iterating through the list, applying neighbourhood operators to the schedule contained in each replica. For example, for each replica, a random number I of iterations, in the range 10-10000, can be chosen and, at each of the I iterations, an operator is randomly selected and applied to the schedule 101 of the replica 100. In this example, each replica is modified using the schedule input at S801 as a starting point but in other examples, any other schedule already in the circular list can be used. For example, if the replicas are being processed in the order of the list, for each replica to modify/diversify/differentiate, the schedule in the previous replica can be used as a starting point before modifying the replica (e.g. using one or more operators on the schedule).

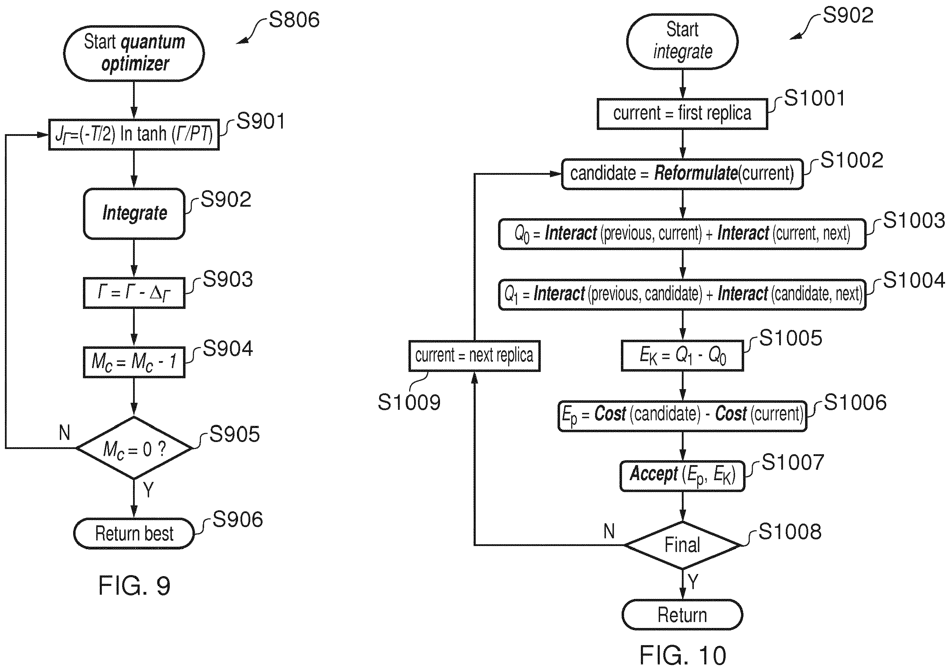

This process aims at generating data with a high entropy with a view to reducing the resources needed by the optimiser to identify a suitable schedule compared to data having a low entropy (e.g. a list of P identical replicas) when starting with the same set of data (tasks, workers, time periods, constraints and any other data), as mentioned above. In other words, these steps increase the data differences between the replicas that are to be input to the optimiser. Consequently, the processes "Integrate" (discussed in respect of Figure 10) and "Interact", together are expected to be immediately able to generate the sufficient fluctuations in the Hamiltonian-type calculation, which is a central element when simulating the quantum tunnelling effect. Without this process, the optimiser may be required to carry out a number of $M_c$ outer loops which has to be increased by between 10xP and 10,000xP to reach a quality of schedule in the search, thereby significantly increasing the amount of computing resources required by the optimiser. The third process facilitates a reduction in computing resources waste and simplifies the organisation of computer codes into well-defined phases of operation.

For each replica, the encoding 102 in the replica 100 can then be generated or updated to correspond to the schedule 101 in the replica (S804). While this has been presented as being done sequentially, in some examples this step can be carried out at any time after the relevant schedule has been generated or modified and may for example be carried out before and/or in parallel with step S803 in respect of the next replica to be differentiated. Also, this example refers to a replica as illustrated in Figure 1 but in cases where the replicas 100 include an encoding 102 but no schedule 101 (e.g. if the schedule can be uniquely retrieved from the encoding 102), then the diversification/differentiation can be carried out directly on the encoding 102 (in this case steps S803 is applied to the encoding and S804 becomes irrelevant). At the end of S804, a circular list of P replicas has thus been generated in a format that is now suitable for use with the QA optimiser and wherein the format and content have also been selected in view of the workings of the QA optimiser with a view to reducing the resources required by the optimiser and/or reducing the time required by the QA optimiser to identify a suitable solution.

It is noteworthy that in the example of Figure 8, the list is a list of "replicas" which in some examples can be taken as referring to replicas as discussed with reference to Figure 1. In this case, the list of P replicas also provides, inter alia, a list of P encodings as each replica comprises an encoding 200 corresponding to the schedule associated with the replica. In other examples a list of replicas may be created wherein the replica may be understood to refer to an encoding such that the list comprises P encodings 200 corresponding to P schedules. For example, P schedules may be generated and encodings for the P schedules may be generated and stored in an -optionally circular- list of P encodings.

At step S805 (which may be carried out by the pre-processing unit and/or by the optimiser as appropriate), controlling parameters are selected for use by the QA optimiser. In the case of a QA optimiser, these control parameters can include: Magnetic Field Gamma $\Gamma$; Delta Gamma $\Delta\Gamma$; Temperature T; and Monte Carlo steps $M_c$ which are further discussed below. The conventional selection of these parameters will now be discussed. Typically, $\Gamma$ can be chosen by experimentation and can be selected in the 1-5 range. Generally, a higher $\Gamma$ value can reduce the likelihood of the optimiser converging to a suitable schedule in a given time while a lower $\Gamma$ value can increase the risk of the optimiser converging too quickly (and thereby miss potentially valuable schedules in the search). Parameter T (temperature) is a parameter that is usually linked to $\Gamma$ and which can be selected as being in the order of $\Gamma/10$ to $\Gamma/100$. $M_C$ represents a number of times an "outer" loop of the QA optimisation process is to be carried out and can be selected taking into account a desired running time, computing resources capabilities (e.g. CPU speed) and experimentation. $M_C$ can for example take a value in the range $5\times10^6 - 2\times10^9$. $\Delta\Gamma$ is calculated as $\Gamma$ divided by $M_C$ so as to reduce the weight of $\Gamma$ with each new outer loop of the Mc outer loops as $\Gamma$ can be updated at the end of each outer loop for example to $\Gamma- \Delta\Gamma$. It should be noted that in other examples, parameter $\Gamma$ can be updated differently at each additional outer loop such that parameter $\Delta\Gamma$ may then not be needed or not be defined as such at S805. The roles of these parameters can be better understood with reference to [1] and [2] and to the discussion below of the pseudo code for a QA optimiser. The present disclosure is directed to techniques for selecting parameters for running a QA optimiser when attempting to identify a schedule, with a view to accelerating the convergence of the optimiser and/or the quality of the schedules identified by the optimiser.

Finally, at S806, QA optimiser is operated with a view to identifying a suitable and feasible schedule from the set of tasks, workers and constraints (and any other additional information that may be relevant and available). A pseudo-code for a QA Optimiser ("QAO") will now be discussed with a view to illustrating how each parameter can, independently and in combination with the other parameters, affect the speed, efficiency and outcome of the optimiser.

## QAO $(P, T, \Gamma, \Delta\Gamma, Mc, N)$

```
1.      S ← circular list of P feasible randomized solutions
2.      s_best ← s_0
3.      while(Mc>0)
4.             J_Γ ← (-T/2) ln (tanh (Γ/PT))
5.             z ← 0
6.             while(z<P)
7.                    randomly chose n ∈ N
8.                    s' ← n(s_z)
9.                    ΔH_p ← H_p(s') - H_p(s_z)
10.                   ΔH_k ← Interact(s_{z-1},s',s_{z+1}) - Interact(s_{z-1},s_z,s_{z+1})
11.                   ΔH ← (ΔH_p/P) + J_Γ ΔH_k
12.                   if (ΔH_p<=0) OR (ΔH<=0)
13.                          then s_z ← s'
14.                   else if exp(-ΔH/T) > random(0, 1)
15.                          then s_z ← s'
16.                   if Hp(s_z) < Hp(s_best)
17.                          then s_best ← s_z
18.                   z ← z+1
19.            Γ ← Γ-ΔΓ
20.            Mc ← Mc-1
21.     return s_best
```

The objective and function of the different steps of the QAO will now be discussed to illustrate how the QAO attempts to identify a suitable schedule.

- *Lines 1-2*: the algorithm is initialised (see the discussion of Figure 8) where a set of replicas S is initialised to any P replicas corresponding to P schedules and the best schedule $S_{best}$ is initialised as one of the schedules of the set S. In this example the first schedule $S_0$ is selected but any other schedule may be selected. Also, with a diversified set of schedules S, the QAO would generally be expected to return better schedule as it would assist the QAO with exploring more diverse schedules and thus more diverse neighbourhoods around these schedules before converging around the best one(s). However these initialisation steps are not the focus of the present disclosure.
- *Line 3*: the "outer" loop corresponds to the number of times (Mc) that the QAO goes over each schedule in the set S, with a view to improving the set S at each outer loop so that it converges around a suitable schedule
- *Line 4*: this coupling term $J_\Gamma$ varies during the QA optimisation to vary the weight of the interactions between schedules relative to the difference in costs when deciding whether to replace a schedule $s_z$ with a candidate s' while running the inner loop (see below).
- *Lines 5-6*: these lines initialise and define the inner loop, when the optimiser processes each replica $s_z$ (with z=0...P-1 or z=1...P) in the current set of P replicas to determine whether to replace each of the replicas with a candidate replica.
- *Lines 7-8*: for each replica $s_z$, a neighbouring replica is identified as a candidate one. In this example, this is done by selecting a neighbouring operator n from a set of neighbouring operators N but in other examples a plurality of neighbouring operators could be selected and applied or any other method suitable for selecting a candidate replica may be used. Preferably, the neighbouring operator is selected randomly as this is expected to increase the likelihood of exploring a variety of schedules but in other examples the operator may be selected differently, if appropriate.
- *Line 9:* the delta in energy $\Delta H_p$ between the current replica and the candidate replica is calculated and effectively provides a comparison in cost between the current replica and the candidate replica.
- *Line 10*: this delta in energy $\Delta H_k$ represents a measure of the difference between a similarity between the current replica and its neighbours ($s_{z-1}$, $s_{z+1}$) and the corresponding similarity between the candidate replica and the neighbours. This term is the term that enables the quantum effect of tunnelling between states otherwise separated by a barrier of energy.
- *Line 11*: the Hamiltonian element H is made of a combination of the cost difference normalised on the number of replicas and on the quantum term weighted by the coupling term $J_\Gamma$
- *Lines 12-13*: if the candidate replica / schedule is better than the current replica /schedule (i.e. if it has a lower cost and thus if $\Delta H_p \leq 0$) or if the Hamiltonian is negative (e.g. the candidate schedule could be worse than the current one in terms of costs but due to the tunnelling effect it could still be selected), then the candidate replica s' is accepted as a replacement for the current replica $s_z$.
- *Lines 14-15*: if the candidate schedule is not accepted then but if exp(-$\Delta$H/T) is more than a random number selected in the [0,1] range, then the candidate replica s' can still be accepted as a replacement for the current replica $s_z$. This gives another opportunity to select a worse candidate, using a random component and is sometimes referred to as the Metropolis criterion. Accepting some worse solutions -under certain conditions- is considered helpful for exploring a variety of schedules and sometimes remote schedules thereby increasing the likelihood of identifying a relatively good schedule and decreasing the likelihood of exploring only the neighbourhood of the first identified schedules.
- *Lines 16-17*: if the current schedule has a better score (e.g. lower cost) than the current best schedule, then the current best is replaced by the current schedule. It is noteworthy that, in some examples, the best schedule may first be initialised as the best of the initial set of P replicas and this test for a better schedule may only be carried out if the current replica has been replaced by the candidate. In a further example, this step is only carried out if the current replica is replaced by the candidate one when the condition "$\Delta H_p \leq 0$" is met.
- *Line 18*: the replica counter is increased and the next replica in the set -if any- is now considered by the optimiser (see line 6).
- *Lines 19-20*: once all of the inner loops for one outer loop have been carried out, the parameter $\Gamma$ is being decreased by the factor $\Delta\Gamma$, the number of remaining outer loops to be carried out is being decreased as well. By decreasing the factor $\Gamma$, the coupling term $J_\Gamma$ is increased, thereby increasing the weight of the interaction between the replicas (quantum term) compared to the terms based on cost only. By increasing this coupling term, the effect of convergence of all replicas towards an optimised replica is increased as the optimiser is running, thereby giving the optimiser originally more freedom to explore a wider range of possible schedules and later on more focus on converging towards an optimised schedule. The optimiser can then either continue with the next outer loop (see line 3) or, if Mc outer loops have been carried out:
- *Line 21*: the best schedule is output. In other examples, rather than tracking the best schedule while the optimiser is running, lines 2 and 16-17 (or their equivalent) may be omitted and the best schedule of the last set of P replicas generated by the optimiser can be identified and selected as the best output.

FIGS. 9-10 are flowcharts illustrating example steps for carrying out a quantum optimisation in accordance with an example of the present disclosure, wherein the process of Figure 9 is herein referred to as the "outer" loop of the optimisation process and Figure 10 is herein referred to as the "inner" loop of the optimisation process. The outer loop is carried out Mc times (referring here to the initial $M_c$ value used by the optimiser) wherein, at each of the outer loops, the list of P replicas will be updated to a new list of P replicas and the inner loop correspond to the processing, for each of the outer loops, of each of the P replicas in the set of P replicas.

In the example of Figure 9, a circular list of P replicas and a set of control parameters are taken as input (although in other examples the control parameters may be pre-determined in the optimiser rather than received every time). In this example, the control parameters are $\Gamma$, $\Delta\Gamma$, T, P and $M_C$ as discussed above. The constants $\Delta\Gamma$, T and P can be placed in storage variables for retrieval by subsequent processes and sub-processes while $\Gamma$ and $M_C$ (which can both change as the optimiser is operated) are placed in accumulator variables so that subsequent processes and sub-processes can retrieve and modify their current value. $\Gamma$ is typically decreased by the fixed amount $\Delta\Gamma$. This results in a reduction in the amount of simulated quantum tunnelling over the course of the outer loop iterations of the optimiser. The expected outcome is that, as time goes, the optimiser is less likely to replace a replica with a different replica and is more likely to replace a replica with a better or similar replica. Initially the optimisation process is expected to consider more different replicas so that it can explore a greater variety of replicas which are potentially remote (i.e. very different) from the replicas in the initial P replicas used as an input (despite these replicas being potentially worse solutions in terms of costs). As times goes, the $\Gamma$ parameter will decrease and the optimiser will be more likely to select only better solutions similar to the already identified solutions. As a result, the set or list of P replicas is expected to converge around one or more schedules with a relatively low cost due to the initial wide range of exploration (due to the higher initial $\Gamma$ value and to the simulated tunnelling effect) and due to the later lower likelihood of acceptance of a worse solution and convergence around the most valuable schedule(s) identified is thus expected.

At S901, the parameter $J_\Gamma$ is calculated, in most cases according to the following equation (1):

$$(1) \qquad J_\Gamma = (-T/2) \ln \tanh (\Gamma/PT)$$

This calculation uses P with current values of the control parameters $\Gamma$ and T. Equation (1) is an example of a calculation of $J_\Gamma$ which aims at providing a non-linear parameter which is not linearly-dependent from $\Gamma$ and T. It is later used in combination with the quantum term Q with a view to affecting the effect of Q over time (i.e. with the number of outer loops which is dependent on the number of outer loops carried out, i.e. to the initial value of parameter $M_c$) in the "Accept" process, an example of which is discussed above in the pseudo-code (see lines 12-15)..

At S902, the "Integrate" process is carried out, which corresponds to the inner loop discussed in respect of Figure 10 below. In simplistic terms, the aim of this step is to perturb the current set of P replicas with a view to achieving the convergence effect discussed above.

At S903, the $\Gamma$ parameter is decreased for the next outer loop (if any). In this example, it is decreased linearly at each of the outer loops by the "$\Gamma / M_C$" (with the initial $M_C$ value representing the total number of outer loops to be carried out) decrement but in other examples it may be reduced using any other arrangement, e.g. using a non-linear reduction of this parameter. Then at S904, the $M_c$ parameter is decremented by 1 to reflect that one outer loop has been completed.

At S905, if the parameter $M_c$ has reached "0", then the desired number of outer loops has been carried out and the optimiser can return the best schedule it has found (S906) and if the parameter has not reached "0" yet, the process returns to S901 and repeats S901-S905 for at least one additional time.

In final step S906, a schedule is output based on the optimisation process carried out. Generally, this can be implemented using one of two methods (although other methods are not excluded). In one example, the set of P replicas is retrieved as last updated by the outer and inner loops previously carried out a number of times, and the P replicas are assessed for identifying the best one of the set, e.g. the replica for a schedule being a feasible schedule and having a lower cost than the other schedules for the set of P replicas. In another example, as the QAO runs, it can keep track of the best replica it has encountered (as this replica could potentially be later replaced by a worse one and never resurface before the end of the process). Any time a replica with a lower cost (i.e. "with a schedule having a lower cost") than the current best replica is found, this newly found replica can become the new best replica. In this case, at S906 the optimiser can return or output the replica which has been identified as the best encountered while the process was running. The second method is more likely to identify a better replica (for the reasons discussed above) but the trade-off to be made is that it is likely to require additional comparisons which can in turn reduce the speed of the optimiser.

The sub-process, or inner loop, "Integrate" is described in more detail with reference to Figure 10. The Integrate process takes as an input the current set of P replicas and perturbs them based on the current parameters by going through each replica in the set of P replicas and processing them.

First, at S1001, the process is initialised by setting the "current" replica as the first replica in the list (although it could also be initialised to any other of the P replicas in other examples). Then at S1002 a candidate replica is generated by modifying the current replica. The remainder of the loop comprises steps which will decide whether the candidate replica will replace the current replica in the set of P replicas.

At step S1003, a quantum term $Q_0$ is calculated for the current replica with reference to the previous replica, i.e. the replica before the current replica in the circular list, and to the next replica, i.e. the replica after the current replica in the circular list. Likewise, at S1004, a corresponding quantum term $Q_1$ is calculated for the candidate replica with reference to the same previous and next replicas. The quantum term is calculated using an "Interact" function which measures similarity between the schedule at hand (in this case one of the current schedule and the candidate schedule) with the schedules neighbouring the current schedule. In simplistic/simplified terms, a quantum term Q can be viewed as being based on a summation of all the interaction energies calculated between corresponding spins (-1/+1) from pairs of encodings. Generally, the greater the difference between encodings, the more Q increases. Likewise, the more two schedules (and thus the corresponding two encodings) are similar, the more the value for Q will decrease.

In this example, the quantum term $Q_0$ is the sum of: the interactions calculated for the current replica in relation to the previous in the circular list; and the interactions calculated for the current replica in relation to the next in the circular list. Likewise, the corresponding quantum term $Q_1$ is the sum of: the interactions calculated for the candidate replica in relation to the previous in the circular list; and the interactions calculated for the candidate replica in relation to the next in the circular list.

At S1005, the combined quantum term $E_K$ is calculated as the difference between $Q_1$ and $Q_0$ for use by the Accept function (see below). At S1006 a difference in cost $E_P$ between the current and candidate replicas is calculated (i.e. the difference in cost for the schedule in the current replica and the schedule in the candidate replica), also for use by the Accept function (see below). The combined action of S1002-S1005 is that the quantum term $E_K$, will fluctuate from iteration to iteration. This fluctuation can be amplified or attenuated by the sub-process "Accept". Together, these processes are used with a view to simulating the quantum tunnelling effect.

At S1007, the Accept process takes $E_P$ and $E_K$ as an input for deciding whether to replace the current replica with the candidate replica generated at S1002, wherein this decision or determination of whether to replace the current replica with the candidate is determined by a probabilistic function of the terms $E_K$ and $E_P$. Once either the current has been maintained or replaced by the candidate replica at S1007, the process moves to S1008 where it is determined if all replicas of the set of replicas processed by the inner loop have been processed. If all have been processed, the process can terminate as all replicas have been considered and replaced by a candidate replica if appropriate. On the other hand, if one or more replicas of the P replicas have not been processed yet by the inner loop, the method sets the current replica as one of these one or more replicas to be processed and returns to S1002. In one example, the replicas are considered in the order of the circular list but in other examples the replicas may be considered in any other suitable order.

In summary, the combined action of the processes of "Integrate" is to perform a kind of search which is expected to select good schedule configurations, but also less good but potentially promising configurations which could lead, upon further reformulation, to even better schedules. This latter choice is heavily dependent upon the strength of the simulated quantum tunnelling effect, i.e. in the example of Figure 10, on the strength given to the calculated quantum term $E_K$. The quantum terms or fluctuations which are combined with the cost of a schedule can give the search access to schedules which would be inaccessible to non-tunnelling algorithms such as Simulated Annealing. Such non-tunnelling algorithms search by repeatedly reformulating a single schedule and are thus constrained to follow a direct path from one reformulation to the next. In contrast, "Integrate" effectively performs many (P) searches in parallel, which not only increases the number of schedules which can be explored, but also allows with the use of the quantum term $E_K$, the search to take short cuts, or 'tunnelling', between what would ordinarily be (measured in the number of reformulations) distant schedules. The quantum term can be used to affect how far to tunnel (where to search), and can contribute to the acceptance of reformulated schedules (how likely the search is to continue from a given reformulation).

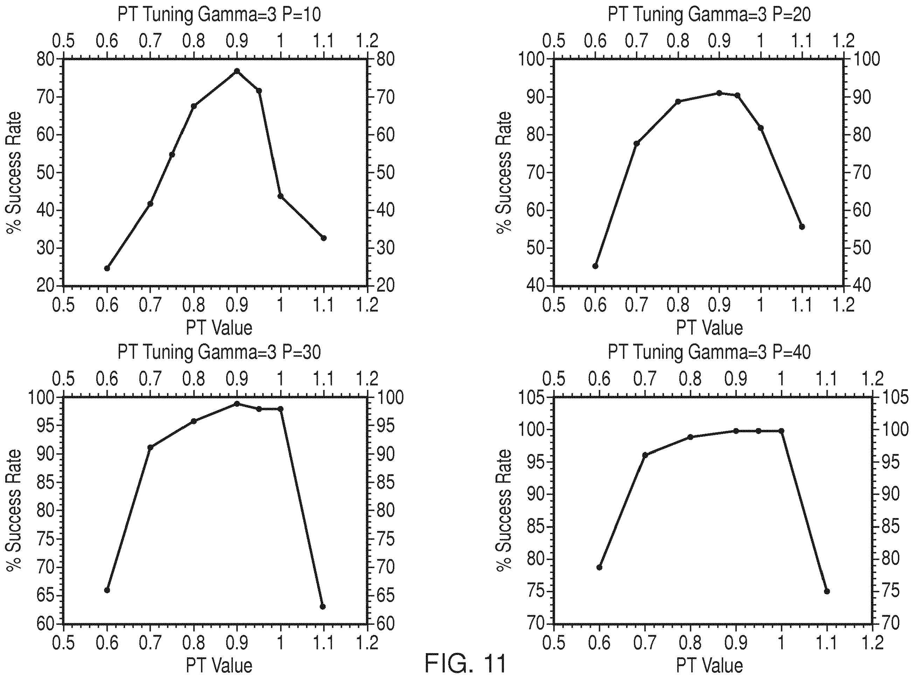

In view of the complexity of the optimiser itself and of the number of parameters that can affect the outcome of the optimiser, and their inter-dependence, especially their non-linear dependence, tuning the parameters so that the operation of the optimiser is accelerated (i.e. so that the optimiser explores a variety of possible schedules but also converges towards good enough solutions quicker) is also very complex. Additionally, when tuning the parameters, in particular the number of replicas P, the temperature T and the magnetic field $\Gamma$, intuitive changes are not always guaranteed to provide the wanted outcome. For example, while it would generally be intuitively expected that by increasing the number of replicas P considered in the inner loop of the optimiser would increase the efficiency of the algorithm due to the number of different schedules considered and thus explored. However, due to the cross-dependence between the different parameters, this can in reality be counter-productive and can reduce the efficiency of the algorithm. This is illustrated in Figure 11 which shows that, even when starting with parameters providing very good results, if T is kept constant as P is increased, then PT is increased and the success rate of the optimiser will suddenly drop. It can therefore be very difficult to devise parameter tuning techniques which would yield good results across a variety of situations. And viewed from a perspective, traditional approaches to tuning the optimiser's parameters cannot be followed and entirely new approaches may have to be considered instead. More generally, the optimiser can be extremely sensitive to variations on any of its parameters (e.g. via the coupling terms, the metropolis criteria or any other element involved in the running of the optimiser), and these parameters will one way or another affect the selecting/acceptance stages of the optimiser -e.g. the metropolis criterion depends on the temperature. As a result, it is difficult to anticipate the effect of changing one or more of the parameters individually or together and this renders the tuning of the parameters unpredictable and very challenging.

A Design of Experiments (DoE) method (see for example reference [3] "Tuning an algorithm using design of experiments") can be helpful when trying to uncover major dependencies between such parameters. However, a course of factorial experiments can be time-consuming, and deciding which ranges to use for numerous and sensitive variables in practice relies on guessing which ones are expected to yield the best results (which, as described above, is extremely difficult to guess accurately). Therefore this method is not satisfactory in the present case.

For a QAO, some limited analysis of the effect of the different parameters on the efficiency and success rate of a QAO have been carried out. It has for example been found that the magnetic field can be set constant when considering a graph colouring problem (see reference [4] "Quantum Annealing of the graph colouring problem") although a constant value for the magnetic field that would result in the QAO converging for the graph colouring problem considered still has to be determined by experimentation. In other words, rather than setting $\Gamma$ and $\Delta\Gamma$, $\Delta\Gamma$ is set to zero such that $\Gamma$ is kept constant throughout the optimisation of the graph colouring problem. While some of the beneficial aspects of having a reducing $\Gamma$ as the optimiser operates (see the discussions above) may be lost, it has been found that the effect is limited enough to be compensated for by a facilitated parameters' tuning for this graph colouring problem. However, the remaining parameters to be tuned remain in a high number, cross-dependent and highly sensitive.

Therefore, even if a tuning method is found which may identify suitable parameters for a QAO trying to optimise a first schedule (i.e. try to identify a good solution amongst all possible solutions for a set of tasks, a workforce and a set of time periods or slots), this tuning method is likely to be time consuming such that it may not always be time- or cost-efficient to try to tune the parameters for each set of data for a schedule to be optimised compared to, for example, running an optimiser on non-tuned parameters. On the other hand, if a first set of tuned parameters could be identified for a first set of data (e.g. a set of tasks, a workforce and a set of time periods) and could be transposed to a second set of tuned parameters when trying to optimise a schedule for a second set of data, significant time savings could be achieved. In effect the entire parameter tuning method may not have to be applied for each schedule and corresponding set of data, but it can be applied once and can then be re-used when considering further schedules/sets of data. Provided that the method for transposing a set of tuned parameters from one set of data to another is less time- and resource-consuming than the original tuning method, savings could be achieved. However there are barriers to transposing tuned parameters from one set of data to another, as will become apparent from the discussion below.

Tuning methods have been discussed that aim at identifying a set of parameters {$\Gamma$, P, T} for a QAO for a specific case of the Capacitated Vehicle Routing Problem (CVRP). One of these methods, the "PT tuning" method is discussed in [4] and involves maintaining the magnetic field parameter r at a constant value whilst suitable values for temperature T and P are determined by experimentation. In this paper, this was carried out by using a fixed magnetic field parameter r and, for several fixed values of P, testing the efficiency and success rate of the algorithm with different temperature T values. Accordingly the best combination of the {$\Gamma$, P, T} parameters can be identified or selected as the tuned values for the parameters. It is interesting to note that by plotting the success rates for the "PT" value, sometimes referred to as the effective quantum temperature PT using a reference instance, a particular shape for the PT curve became apparent. Figure 11 shows examples of plotting the PT ("effective temperature") value against the success rate of the QAO where these graphs have been previously generated when the dependency of the QAO to its parameters have been considered. In particular, it is noteworthy that the success rate achieved for a PT value was generally increasing up to the reference values identified as giving the best results and, as PT continues to increase, the success rate then suddenly drops. In other words, if aiming for a PT value close to the reference values, the achieved success rate could be very high or very low. This again shows the interdependence between the parameters and the sensitivity of the optimiser to changes to these parameters: a small change to the PT value can result in a significant drop of the success rate achieved by the QAO. Also, these graphs have been produced using known sets of problems that have been solved and are therefore useful for testing an optimiser in a relatively simple environment, but in a real-life situation, the best solution will not be known which can also make the tuning even more difficult.

While it has been suggested that, once a set of reference values for the {$\Gamma$, P, T} parameters has been identified for a problem or set of data to be optimised, the reference parameter set {$\Gamma$ref, Pref, Tref} could be assumed to give good results if applied to similar problems or sets of data to be optimised. However, as this plotting also shows, the peak for the success rate varies from situation to situation such that reference parameters in one situation could actually result in very low success rates when used in another situation. For example, if the reference values {$\Gamma$ref, Pref, Tref} are derived from the situation considered in the bottom right graph of Figure 11, and are re-used in the situation considered in the top left graph, the success rate would have dropped already for this set of reference values for the parameters and the optimiser would deliver poor results with these reference values. While references [1] and [4] are useful in illustrating that the parameters may be tuned for a specific set of data to optimise, they fail to provide any methods for transposing these parameters for use for optimising a different set of data and shows that relatively small changes close to the best PT value can result in a sudden drop on the quality of the QA optimiser's outcome. Interestingly, using a factorial DoE method, it can also be expected that the PT Tuning method is likely to provide a good tuning method in view of the contribution of the effective temperature PT parameter, and the factorial DoE method also tends to indicate that P makes the greatest contribution to average solution cost.

Accordingly, reference values for optimising a set of data may be obtained using a tuning method, however tuning methods are highly time consuming such that, in a real-life environment, it would not be realistic or satisfactory for a tuning method to be carried out for each set of data to be optimised. Also, it is not predictable whether these reference values may or may not be directly applicable to other sets of data.

According to the present disclosure, there is provided an arrangement in which reference values that have been obtained for optimising a first set of data can be used to derive reference values for optimising another set of data. Accordingly, tuned parameter values can be derived for a new set of data from existing reference values, without having to carry out a parameter tuning method for this new set of data, thereby making significant time savings. In practice, a parameter tuning method could be applied first to a first set of data to derive reference values for this set of data and, when new sets of data are considered, the corresponding parameters values could be derived from the reference values first obtained. In particular, while deriving the corresponding parameters may involve some data processing and thus use time and resources, the amount of time and resources required is expected to be much lower than that required to identify parameter values based on a parameter tuning method applied to this new set of data only.

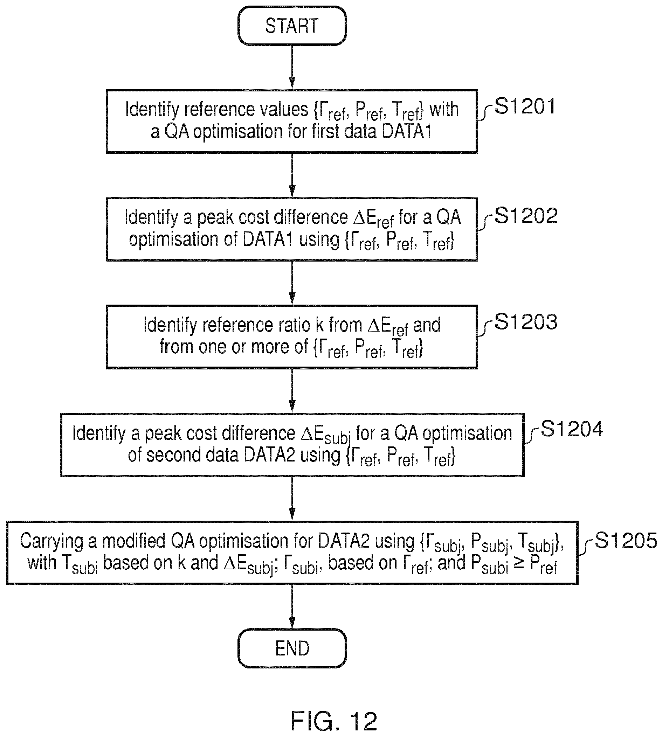

Figure 12 discusses a method for optimising a set of data based on an optimisation for another set of data. The method starts and at S1201, reference values $\{\Gamma_{ref}, P_{ref}, T_{ref}\}$ are identified for a QA optimisation for first data DATA1. For example, the reference value may be retrieved from memory (e.g. from a previous calculation), received from an element, identified using a PT tuning method discussed above or identified using any other technique. Then at S1202, a peak cost difference $\Delta E_{ref}$ for a QA optimisation of DATA1 using $\{\Gamma_{ref}, P_{ref}, T_{ref}\}$ is identified. In other words, a QA optimisation with the reference values for the parameters is carried out and while this is carried out, the difference in energy (cost) between a candidate schedule/replica s' that is accepted and the schedule/replica s that is replaced is measured and its peak value when going through the inner and outer loops of the QAO is identified as $\Delta E_{ref}$. In other words, $\Delta E_{ref}$ represents the largest increase in cost between the cost for a candidate replica s' replacing a replica in the set of $P_{ref}$ replicas and the cost for the replaced replica s. In other words, this corresponds to the largest increase for accepting a worse replica/schedule. Generally $\Delta E_{ref}$ would thus be selected as the maximum cost increase observed between a replaced replica and a candidate replica for all replaced replicas when applying the QAO with the reference parameters $\{\Gamma_{ref}, P_{ref}, T_{ref}\}$. In some cases extreme values of the cost increase could be excluded from the $\Delta E_{ref}$ selection, for example the top 10th percentile of the cost increase values can be ignored wherein the maximum value of the bottom 90th percentile of the cost increase values would be selected as $\Delta E_{ref}$. In other examples all values are taken into account or the top nth percentile of the cost increase values can be ignored with n equal to or greater than 1, 2, 5, 10, 15 or 20. Viewed from a different perspective, only the nth lower cost increase values are being taken into account with n equal to or less than 99, 98, 95, 90, 85 or 80.

Then, based on $\Delta E_{ref}$ and on one or more of $\{\Gamma_{ref}, P_{ref}, T_{ref}\}$, a reference ratio k can be calculated (S1203). In one example, k is calculated according to equation (2)

$$(2) \qquad k = (P_{ref} \ T_{ref})/(\Delta E_{ref})$$

Then, once the reference peak cost difference and the reference ratio have been calculated based on the first data DATA1, based on these elements, tuned parameters for optimising other sets of data (e.g. a new set of data DATA2) can then be derived. With a view to avoiding confusion, the first data and values or elements obtained from the first data are sometimes referred to as the "reference" data, "reference" values or "reference" elements while the second data and values or elements obtained from the second data are sometimes referred to as "subject" data, "subject" values or "subject" elements. This is because these correspond to the current (subject) optimisation of a set of data that is to be based at least in part on a previous reference optimisation of a first set of data already carried out. At S1204 a peak cost difference $\Delta E_{subj}$ for a QA optimisation of DATA2 using $\{\Gamma_{ref}, P_{ref}, T_{ref}\}$ is identified (see step S1203 for the discussion of the peak cost difference). The peak cost difference $\Delta E_{subj}$ can be calculated in a manner similar to $\Delta E_{ref}$ as a maximum cost increase between replaced replicas and their corresponding candidate (replacing) replicas when running the QAO for DATA2 using $\{\Gamma_{ref}, P_{ref}, T_{ref}\}$. In some examples the maximum may be selected from all the cost increase values found when the optimisation is carried out with the reference parameters, while in other examples extreme values can be ignored and disregarded when identifying the $\Delta E_{subj}$. These extreme values represent low-probability results of the Metropolis Criteria can thus be considered as being non-representative values. For example, a threshold may be determined wherein $\Delta E_{subj}$ is selected as the maximum cost increase values for cost increase values smaller than this threshold. The threshold can for example be set as a multiple or a fraction of the reference peak difference $\Delta E_{ref}$, e.g. as 0.5, 0.75, 1 or 2 times $\Delta E_{ref}$ or as less than 50% or 100% of $\Delta E_{ref}$. In other examples parametric extremity can be used to remove values which are beyond +3 standard deviations away from the mean for example or non-parametric extremity can be used to remove any values higher than the 3rd quartile or the 80th percentile.

Then, based on this subject peak cost difference and on the reference ratio, the subject value for the temperature can be derived. In one example, $T_{subj}$ is calculated in accordance with equation (3):

$$(3) \qquad T_{subj} = k\, \Delta E_{subj}$$

Likewise, the subject magnetic field value $\Gamma_{subj}$ can be derived from the reference magnetic field value $\Gamma_{ref}$ and, in some examples, $\Gamma_{subj} = \Gamma_{ref}$. The subject value for the number of replicas $P_{subj}$ is also derived from the reference value for the number of replicas $P_{ref}$. In some examples $P_{subj} = P_{ref}$ and in other examples $P_{subj} = P_{ref} + p$ with p>0. Accordingly, at S1205, a modified QA optimisation can be carried out for DATA2 using $\{\Gamma_{subj}, P_{subj}, T_{subj}\}$, with $T_{subj}$ based on k and $\Delta E_{subj}$; $\Gamma_{subj}$, based on $\Gamma_{ref}$; and $P_{subj} \geq P_{ref}$. More specifically, the QA optimisation is modified compared to a conventional QA optimisation in that the coupling term (see the discussion of $J_\Gamma$ above) is made constant throughout the optimisation (i.e. the optimisation is run with $\Delta\Gamma = 0$). In some examples, the QA optimisation is further modified to change how the parameter P is used during the optimisation (see the discussion of "Example 1" below).

Accordingly, by running a first QA optimisation for DATA2, tuned parameters for DATA2 can then be identified and a modified QA optimisation for DATA2 can be performed based on these tuned parameters. This involves considerably less calculation -and thus less use of time and resources- than carried out by a parameter tuning method for DATA2 (e.g. a PT tuning method) without regard for the tuned parameters obtained for DATA1.

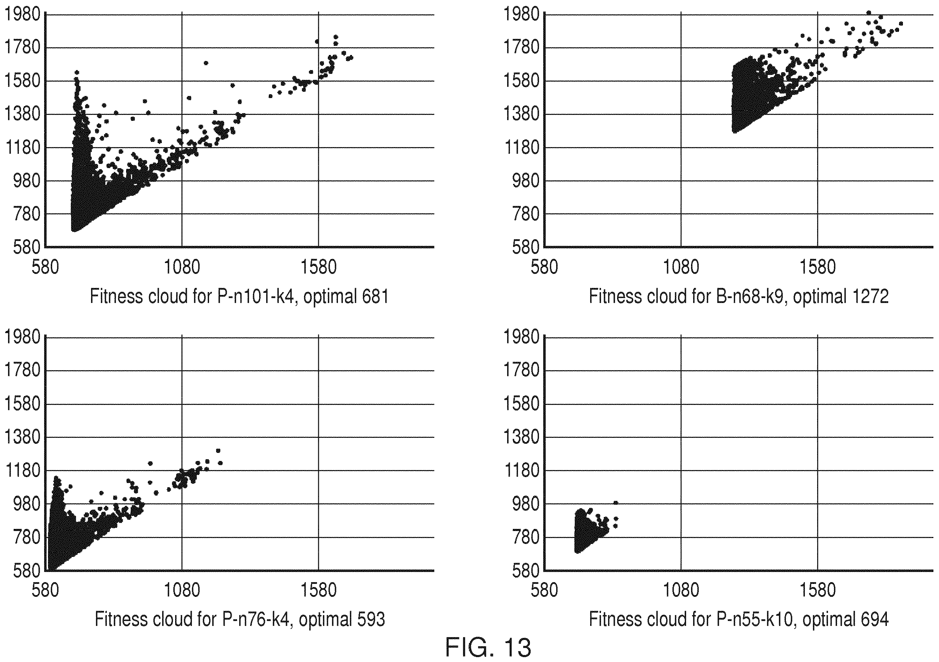

Also, this method if expected to yield good results in view of some of the surprising observations that have been made when considering a QA optimisation, as discussed below and with reference to Figures 13-15. Figure 13 shows the relative costs plotting for schedules explored while running a QA optimisation for four different CRVP situations that have been considered for testing purposes, wherein cost plotting graphs of this type are often referred to as fitness clouds. In other words, these graphs plot the relative costs for the current schedule s being considered relative to the candidate s' that is being assessed against the current schedule to see whether the current schedule s will be replaced with the candidate schedule s' (inner loop). In these graphs, the x-axis is used for plotting the cost of the current schedule s (i.e. cost(s)) and the y-axis is used to plot the cost of the candidate schedule s' (i.e. cost(s')). It is noteworthy that, due to the number of (s;s') pairs that can be considered while a QAO is operating, these graphs have been generated based on (s;s') pairs identified by sampling the (s;s') pairs considered by the optimiser at a regular interval (e.g. every 200ms). In other words, the graphs do not necessarily show each and every one of the (s;s') pairs considered by the optimiser but, by sampling a large number of these pairs, it can give a relatively good view on the landscape of the schedules explored by the QAO and in particular on the relative costs for the schedules explored by the QAO. The four problems considered there are known problems that have been used in the literature as they have each a known best solution such that the efficiency and success rate of an optimising method can be tested on them. The optimised schedule identified by this optimising method can for example be compared with the known best solution and, even when different optimisers can find the best solution, they can be further compared based on how quickly they first found the best solution.

Returning to Figure 13, it is interesting to note that there is a strong similarity in the shape of the landscapes of schedules and candidate schedules explored by the optimisers for different problems. These similarities in shape therefore tend to indicate that there may be some scalability in the optimiser's behaviour from one problem to the other. Considering that the Metropolis criteria for a QAO is based on T and $\Delta H$ (see for example lines 14-15 for the QAO discussed above) and that $\Delta H$ itself is mostly influenced by $\Delta H_p/P$ (the difference in cost relative to the number of replicas) compared to the weight of $\Delta H_k$, it is expected that by scaling the parameters based on a difference in costs for a first set of data and a corresponding difference in costs for a second set of data, tuned parameters can be identified from this and from tuned parameters for the first set of data and these tuned parameters can be used for the second set of data.

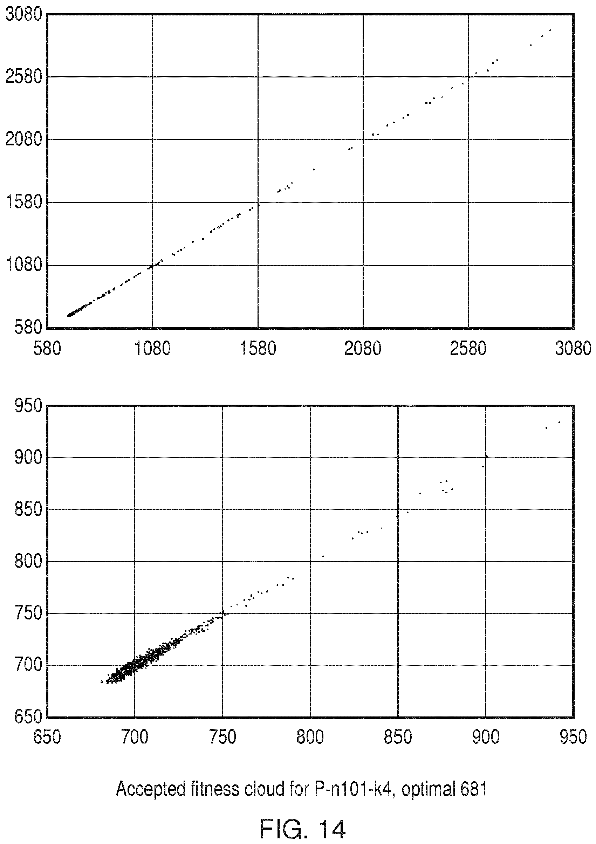

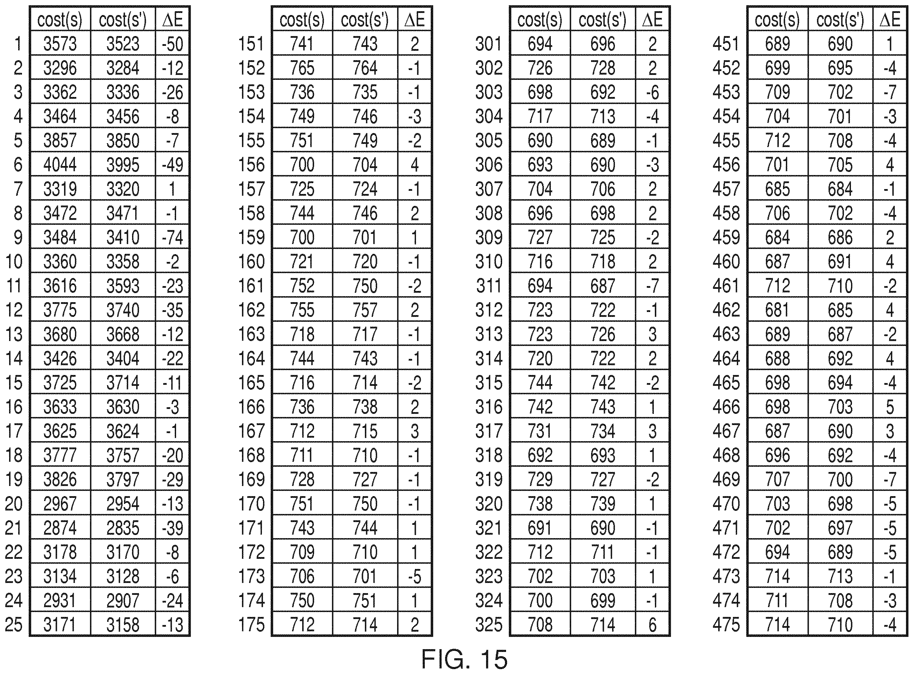

This is why finding a scalability factor for the parameters based on a peak difference between the costs for an accepted candidate schedule and for the schedule replaced by this candidate schedule is expected to provide an acceptable scalability factor for the tuning of the parameters. While the fitness clouds shown in Figure 13 show plotting for pairs of (s;s') schedules considered by a QAO, the fitness clouds of Figure 14 show plotting of costs for schedules explored and accepted by a QAO. In other words, the plotting on these fitness clouds is limited to pairs (s;s') where the candidate schedule s' was accepted by the QAO to replace the current schedule s and is thus a subset of the top-left fitness cloud of Figure 13 for (s;s') pairs considered by the QAO. As for the graphs on Figure 13, the entries considered for generating the graphs of Figure 14 correspond to sampled (s;s') pairs and do not include all of the (s;s') pairs where the QAO accepted s' as a replacement for s. The top and bottom graphs of Figure 14 show the same fitness cloud where the top graph is looking at a broader range of costs and where the bottom graph is more focussed on costs around the optimal solution (with a cost of 681). A subset of some of the entries used for generating the graphs of Figure 14 are also shown in Figure 15 which show the costs for s and s' when s' replaces s (amongst the sample entries considered -as previously mentioned Figures 14-15 are not based on an exhaustive list of all entries where s' replaces s when the QAO was processing this particular set of data). As can be seen from Figures 14-15, high cost schedules are gradually replaced by low cost schedules over time and while most of the accepted candidates have a lower cost than the replaced schedule, in some cases a worst schedule is accepted (see for example entries 7, 151, 156, 158-159, etc.). As better schedules are accepted by the optimiser and with the quantum effect of the interactions between the schedules/replicas and their neighbours, the quality of the replicas of the set of replicas improve overall. With time, the costs of the schedules in the set of replicas moves from higher costs (top and right-hand side of the graphs) to lower costs, closer to the optimal solution (bottom and left-hand side of the graphs). While the QAO operates, the difference in costs $\Delta E$ between schedule s and schedule s' when the candidate schedule s' replaces the current schedule s is monitored and the peak value for $\Delta E$ is identified. Using the terminology of the QAO pseudo-code given above, $\Delta E$ corresponds to $\Delta H_p$ which compares the costs for the candidate and current schedule and thus the peak value $\Delta E$ corresponds to the peak value for $\Delta H_p$ for cases where the candidate schedule s' replaces the current schedule s during the application of the acceptance function (see QAO pseudo code lines 12-15 or S1007 discussed above).

In the set of data considered with the examples of Figures 13-15, it was for example found that the peak value for $\Delta E$ was 13. In other words, the maximum increase in cost for accepting a worse schedule in this case was an increase in cost by 13. As this cost increase is related to the application of the Metropolis criteria during the operation of the QAO and in view of the similarity in shape for the fitness clouds shown in Figure 13, this peak $\Delta E$ has been identified as a good candidate for scaling the parameters of a QAO. As the effective temperature (PT) value has also been shown to play a significant role in the success rate of the QAO and as the PT/success rate graphs also appear to show some scalability (see for example Figure 11), a scalability ratio can be defined as shown in equation (2) above which is repeated below for the reader's convenience:

$$(2) \qquad k = (P_{ref}\, T_{ref})/(\Delta E_{ref})$$

Scaling parameters that have already been tuned for a first set of data based on this ratio and on a corresponding peak energy difference for a second set of data is thus expected to yield good results for optimising the second set of data with a QAO.

This is further illustrated below with reference to Example 1 and Example 2 which show two illustrations of how this scaling can be applied.

Example 1

In this example, k is calculated according to equation (2) above and the tuned values for the parameters for a second set of data (the subject values) are derived from the tuned values for these parameters the first set of data (the reference values) according to the following equations (3)-(6):

$$(3) \qquad T_{subj} = k\, \Delta E_{subj}$$

$$(4) \qquad \Gamma_{subj} = \Gamma_{ref}$$

$$(5) \qquad P_{subj} = P_{ref} + p,\ p{\geq}0$$

$$(6) \qquad J_\Gamma = (-T_{subj}/2)\, \ln\, (\tanh\, (\Gamma_{subj}/P_{subj}T_{subj}))$$

Moreover, additionally to modifying a conventional QAO to have a constant $J_\Gamma$ (e.g. by setting $\Delta\Gamma$ when considering a conventional QAO), the QAO can be further modified in view of (3) to change how the different terms are normalised or not relative to P. This comes from equation (3) being also equivalent to -when taking equation (2) into account:

$$(3) \qquad T_{subj} = P_{ref} T_{ref} (\Delta E_{subj}/\Delta E_{ref})$$

The Modified QAO ("MQAO") can thus be modified according to the following pseudo-code, where the modifications relative to a conventional QAO are marked in italics:

### M_QAO (P, T, $\Gamma$, Mc, N)

1. $S \leftarrow$ circular list of P feasible randomized solutions

2. $s_{best} \leftarrow s_0$

3. while(Mc>0)

4. $\quad z \leftarrow 0$

5. $\quad$ while(z<P)

6. $\qquad$ randomly chose $n \in N$

7. $\qquad s' \leftarrow n(s_z)$

8. $\qquad \Delta H_p \leftarrow H_p(s') - H_p(s_z)$

9. $\qquad \Delta H_k \leftarrow$ Interact($s_{z-1}$,s',$s_{z+1}$) - Interact($s_{z-1}$,$s_z$,$s_{z+1}$)

10. $\qquad \Delta H \leftarrow \Delta H_p + J_\Gamma \Delta H_k$

11. $\qquad$ if ($\Delta H_p$<=0) OR ($\Delta H$<=0)

12. $\qquad\quad$ then $s_z \leftarrow s'$

13. $\qquad$ else if exp(-$\Delta H$/T) > random(0, 1)

14. $\qquad\quad$ then $s_z \leftarrow s'$

15. $\qquad$ if $H_p(s_z) < H_p(s_{best})$

16. $\qquad\quad$ then $s_{best} \leftarrow s_z$

17. $\qquad z \leftarrow z+1$

18. $\quad$ Mc $\leftarrow$ Mc-1

19. return $s_{best}$

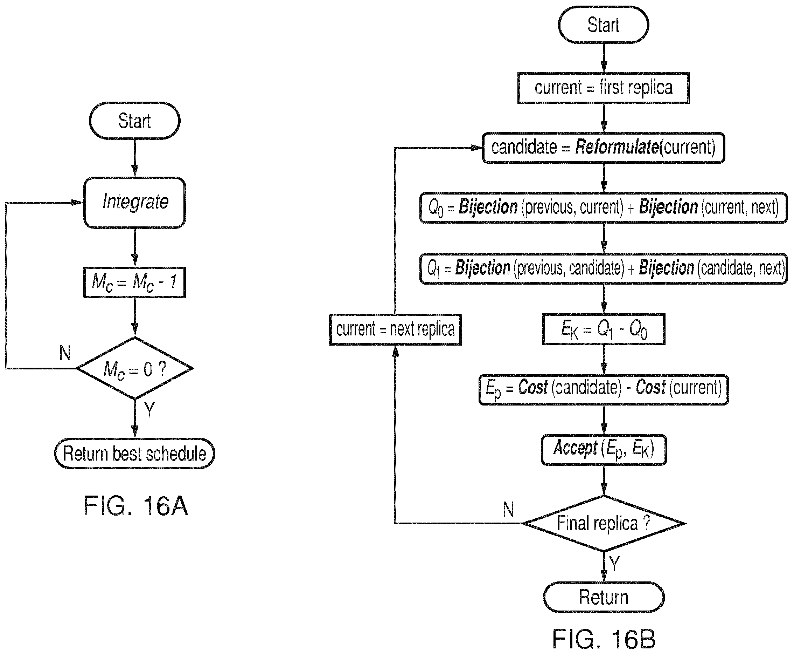

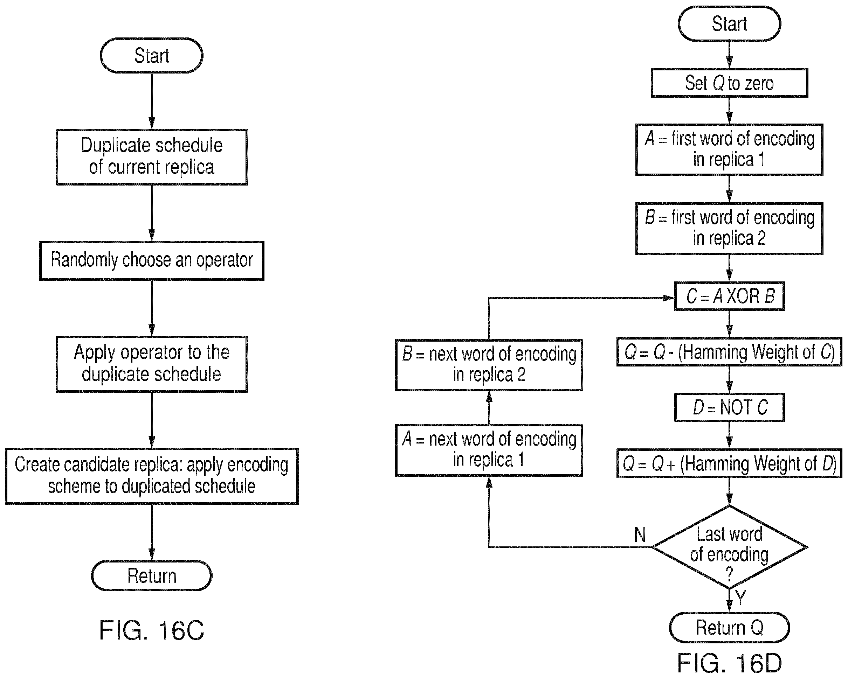

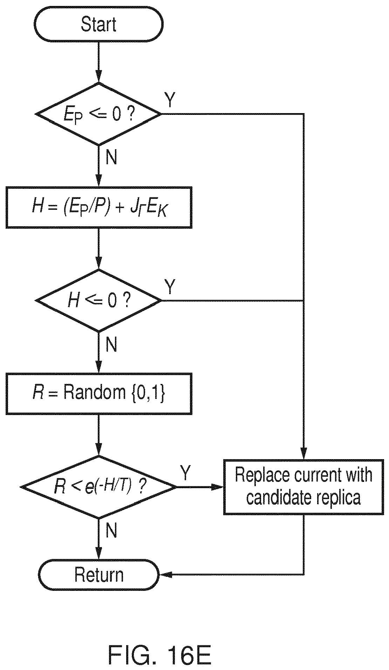

This M_QAO corresponds also to the flowcharts provided as Figures 16A-16E wherein Figure 16A represents the outer loop, Figure 16B represents the inner loop ("Integrate" of Figure 16A), Figure 16C represents the generation of a candidate schedule ("Reformulate in Figure 16B), Figure 16D represents the calculation of the interaction between two replicas ("Bijection" in Figure 16B) and Figure 16E represents the acceptance function ("Accept" in Figure 16B). As these figures should be self-explanatory and correspond to the M_QAO above, they will not be discussed herein in detail and the reader is directed to the discussion of the corresponding elements of the M_QAO and/or QAO discussed in the present disclosure.

In addition to the modified line 10 above, it is noteworthy that the M_QAO does not take $\Delta \Gamma$ as a parameter (as it is effectively set to zero compared to a conventional QAO) and also does not include any calculation corresponding to lines 4 and 19 in a conventional QAO. The latter point is because (i) $\Gamma$ is kept constant and thus does not need re-adjusting at every new outer loop and because (ii) the coupling term does not need to be re-calculated at every outer loop. In some examples, the pseudo code can include an additional line at any position before line 3 and which involves calculating the constant value for the coupling term $J_\Gamma$ a single time for an entire optimisation, as part of the initialisation steps of the M_QAO. In another example, rather than taking $\Gamma$ as an input parameter, the M_QAO could take $J_\Gamma$ only as an input parameter and the magnetic field parameter $\Gamma$ is not used in lines 1-19 of the M_QAO except for the calculation of the constant $J_\Gamma$.

Returning to line 10, it has been found that, by calculating k as above (see equation (2)) and $T_{subj}$ as above (see equation (3)) and by adapting the conventional QA steps to remove the averaging with respect to P -and by using a fixed $J_\Gamma$ calculated using equations (2)-(6) above-the results of the M_QAO appeared to have indeed improved. It is expected that this outcome results from the effects of the cross dependencies between the parameters and from the potential negative effect of increasing value P having been reduced, thereby improving the behaviour of the optimiser. This has the two-fold effect that the tuned parameters have been scaled from the reference set of data (based on a ratio established based on a comparison of the reference set of data and the subject set of data) to be adapted to the second set of data and that the number of replicas $P_{subj}$ can be increased, if the increased computing and/or time resources are available. This increase in the number of replicas may be carried out without experiencing a drop in the success rate as the effective temperature PT increases. Accordingly, if desired and possible, the number of replicas can be increased with a view to improving the efficiency and/or the success rate of the optimiser while reducing the risk of experiencing a drop in the success rate for the optimiser. At the same time, optimised parameters for the magnetic field and the temperature have also been identified.

This is illustrated in Figure 17 which shows a graph of success rate for a M_QAO based on the effective temperature value for problem B-n63-k10. As can be seen in this graph plotting the normalised effective temperature PT against the success rate of the algorithm for a temperature T=1.10769231, a coupling term $J_\Gamma = 0.00002863$ and a number of outer loops $M_c = 5000000$, the M_QAO does not experience a drop in success rate as the effective temperature increase, which was a surprising but helpful effect of the M_QAO discussed herein. This can assist with the tuning of the algorithm as useful magnetic field $\Gamma$, and temperature T and coupling term $J_\Gamma$ can be identified and, at the same time, the value for the number of replicas P can be increased with a view to improving the success rate without having the usual side effect of seeing a sudden drop in the efficiency of the optimiser that would normally be expected in a conventional optimisation.

According to this example, the following steps may be carried out when trying to optimise a (second) set of data based on a first set of data:

Step 1. Use a tuning method (e.g. PT tuning method) to identify tuned reference values $\{\Gamma_{ref}, P_{ref}, T_{ref}\}$ for the magnetic field, number of replicas and temperature parameters for a QAO to optimise the first set of data. In the example of the PT tuning method, the tuning of the parameters is carried out with a constant magnetic field $\Gamma$ but in other tuning methods the magnetic field $\Gamma$ may be variable during the optimisation rather than maintained at a constant value throughout the optimisation. For example these tuned values may be the ones identified as giving the best results amongst the different values tested for these parameters when using the tuning method.

Step2. Identify the peak value $\Delta E_{ref}$ for the difference in cost between the cost of the replacing replica (i.e. an accepted replica) and the replaced replica (e.g. $\Delta H_p$ in the pseudo code for the QAO for an inner loop which resulted in the current replica $s/s_z$ being replaced by the candidate replica s') when the QAO of Step 1 optimises the first set of data using the tuned reference values for the parameters. In some examples, this may be carried out at the same time as the tuned reference values are identified. For example, for each set of tested parameters $\{\Gamma_i, P_i, T_i\}$ tested for the QAO and the first set of data, a corresponding $\Delta E_i$ value may be identified and, once the best set of parameters has been identified, the corresponding peak $\Delta E$ value may also be identified at the same time without having to optimise the first set of data. In other examples, this information may not already be available from previous calculations and the QAO may optimise the first set of data with the tuned reference values for the parameters and identify this peak difference in cost while carrying out the optimisation.

Step 3. Then, using the QAO with the tuned reference values for the parameters for optimising the second set of data, a peak change in cost for accepted replicas $\Delta E_{subj}$ is identified.

Step 4. Tuned subject values for the parameters can then be derived for the second set of data based on the tuned reference values for the parameters and on the peak changes in cost for accepted replicas for both the first and second sets of data. In particular, the tuned subject values for the parameters can be set as $T_{subj}=k\Delta E_{subj}$ and $P_{subj}=P_{ref} + p$, where $p \geq 0$.

Step 5. The second set of data can be optimised using a M_QAO as described in the pseudo-code above -or equivalent- with the tuned subject parameters previously calculated.

These tuned subject values are expected to assist with an efficient and successful optimisation of the second set of data for the reasons already discussed above. Using experimentation, this has been found to yield good results on the situation where it has been tested. In particular, when attempting to solve known problems for which the optimal solution is known (such that the success rate achieved at step 5 can be measured) the behaviour of the modified QAO (M_QAO) operating using the tuned subject values has been found to be superior to that of the behaviour of a conventional QAO.

In this experimentation, using the P-n101-k4 problem as a reference set of data, reference parameters and peak accepted cost change have first been obtained. Namely, parameters $\{\Gamma_{ref}=3, P_{ref}=40, T_{ref}=22.5\times10^{-3}\}$ were obtained for a number of Monte-Carlo steps of $M_c = 10\times10^6$ were obtained using a PT tuning method and the corresponding peak accepted cost (or energy) change was measured at $\Delta E_{ref} = 13$ (Steps 1-2).

Then, the peak change for seven other problems (defining different sets of data to be optimised), namely P-n50-k10, P-n55-k10, P-n60-k15, P-n76-k4, B-n63-k10, B-n67-k10 and B-n68-k9, were measured (Step 3) and the results are shown below in Table 1.

*Table 1*

| Set of data | $\Delta E$ |
|---|---|
| **P-n101-k4 (reference)** | **13** |
| P-n50-k10 | 15 |
| P-n55-k10 | 14 |
| P-n60-k15 | 14 |
| P-n76-k4 | 17 |
| B-n63-k10 | 16 |
| B-n67-k10 | 15 |
| B-n68-k9 | 17 |

Then, based on the results of Step 3, the tuned parameters for each of the subject sets of data were calculated as discussed above (Step 4).

The modified QAO was then used to try to optimise the second set of data using the tuned subject values for the parameters and the resulting success rate for the modified QAO was noted and compared with the success rate for a conventional QAO, for a set of parameters Gamma=3, Temp=0.0225, P=40 and Mc=5000000, as illustrated in Table 2 below.

*Table 2*

| Set of data | QAO | Success rate % | | |
|---|---|---|---|---|
| | | M_QAO | | |
| | | $P_{sucj} = 40$ (p=0) | $P_{sucj} = 80$ (p=40) | $P_{sucj} = 120$ (p=80) |
| P-n50-k10 | 63 % | 70 % | 88 % | 98 % |
| P-n55-k10 | 35 % | 50 % | 62 % | 78 % |
| P-n60-k15 | 79 % | 92 % | 100 % | 100 % |
| P-n76-k4 | 52 % | 96 % | 100 % | 100 % |
| B-n63-k10 | 26 % | 54 % | 80 % | 96 % |
| B-n67-k10 | 42 % | 74 % | 86 % | 98 % |
| B-n68-k9 | 69 % | 44 % | 50 % | 74 % |

As can be seen on this table, for all cases except for the last one, the success rate of the M_QAO surpassed the QAO when using the same number of replicas which, in view of how difficult and unpredictable the tuning of a QA or QA-based optimiser can be, is an extremely good -and a surprising- result. These results can also be further improved by increasing the number of replicas for the M_QAO which can helpfully further increase the success rate of the optimisation of the second (subject) set of data without having to re-calculate corresponding parameters for the optimiser. This final result was also unexpected when originally trying to identify how the parameters for a QA-based optimiser could be tuned, in particular in view of how the tuning was dependent on the effective temperature and on the number of replicas -with high values of either the effective temperature or the number of replicas resulting in a low success rate.

It is also noteworthy that, while the result for the M_QAO on the "B-n68-k9" set of data is under that of a QAO for the M_QAO running on the same number of replicas, by increasing the number of replicas, this can be compensated to obtain better results than with the QAO. It is noteworthy that, based on the discussions above at least, this is expected to be the result of using the calculation of the tuned values for the parameters and/or of using the modified QAO as discussed herein which enable an increase in the value for parameter P (also resulting in an increase in the effective temperature) without causing a sudden drop in the success rate of the algorithm.

Accordingly, it has been shown that, by scaling the parameters for one set of data to another set of data based on a peak accepted cost difference for the one and other set of data, and by using the scaled parameters for optimising the other set of data with a modified QA optimiser, the efficiency and success rate of the optimisation of the other set of data has been improved. In other words, a higher success rate is generally expected to be achieved with most of these types of problems to optimise when the optimiser is configured with the same number of inner and outer loops. Additionally, as the coupling term no longer has to be calculated for every outer loop, the computing and time resources required for running the optimiser with the same number of outer loops ($M_c$) and inner loops (P) can be reduced. As this coupling term calculation can be greedy in resources, this saving is helpful in improving the efficiency of the optimiser (without affecting the success rate, statistically, of the optimiser in accordance with the teachings provided herein).

Example 2

In this other example, an alternative calculation is used for scaling the temperature $T_{subj}$ based on the reference value for the temperature, the scaling ratio k and the subject value for the peak accepted cost change. As many of teachings provided above apply to this Example 2 as well, this example will only be briefly discussed. In this example, $T_{subj}$ is derived from these according to equation (3'):

$$(3') \qquad T_{subj} = k \, \Delta E_{subj} \, / \, P_{subj}$$

Accordingly, in view of equation (2) for deriving the scaling ratio k, equation (3') in this case can also be written as:

$$(3') \qquad T_{subj} = T_{ref} \times (\Delta E_{subj} \, / \, P_{subj}) \, / \, (\Delta E_{ref} \, / \, P_{ref})$$

And the other subject values for the remaining parameters can be calculated as follows:

$$(4) \qquad \Gamma_{subj} = \Gamma_{ref}$$

$$(5) \qquad P_{subj} = P_{ref} + p, \, p \geq 0$$

$$(6) \qquad J_\Gamma = (-T_{ref}/2) \, \ln (\tanh (\Gamma_{ref}/P_{ref}T_{ref}))$$

or In most cases $J_\Gamma$ will be calculated according to (6) on the assumption that this value was helpful in yielding good results with the reference/first set of data and can therefore be associated with an expectation to yield reasonably good results for the subject set of data (e.g. even more so if the two sets of data are relatively similar).

Additionally, in view of equations (5), when p=0, equation (3') can be re-written as equation (3") as follows:

$$(3'') \qquad T_{subj} = T_{ref} \, (\Delta E_{subj} \, / \, \Delta E_{ref})$$

It is in particular noted that in cases where $P_{subj}=P_{ref}$, the value for $P_{ref}/P_{subj}$ will effectively be ignored and the ratio between the peak in energy $\Delta E_{subj}$ and $\Delta E_{ref}$ will serve as the main guide for deriving the subject (tuned) values for the parameters from the reference values for these parameters.

As the temperature in Example 2 is scaled based on the peak cost differences and on both $P_{subj}$ and $P_{ref}$ (or on neither when p=0), which is a point of difference with for example "Example 1" above), a conventional QA optimiser may be used to optimise the second/subject set of data. For example a modified QAO may be used with the second set of data and the tuned subject values for the parameters wherein the QAO is modified to keep the coupling term $J_\Gamma$ constant but where the Hamiltonian difference term ($\Delta H$) calculation is unchanged. That is, the cost difference $\Delta H_p$ of this modified QAO remains averaged relative to P as calculated for example in line 11 of the QAO pseudo-code indicated above (which is another point of difference with "Example 1" above). In this case, if an averaging based on parameter P is not modified when running the modified QAO optimiser, it may be expected that selecting p=0 may be preferable with a view to avoiding a potential drop in the success rate for the QAO if the effective temperature becomes too high. In particular, the effective temperature can be then scaled by a ratio of $(\Delta E_{subj} / \Delta E_{ref})$ (see equation (3") above).

Accordingly, by scaling the parameters based on the peak cost differences and on the number of replicas, it is expected that the scaling observed on the fitness clouds can be replicated and that the tuned subject parameters will enable, in most cases for field services schedules, an improvement in the results of a QA-based optimiser.

It is also noteworthy that, in view of for example the "no free lunch" theorem previously mentioned, it is expected that the techniques presented herein may not always result in an improvement across the entire range of all possible problems or sets of data that could be optimised and that, for at least some of them the proposed techniques may result in worse results. This however has to be considered by taking into account the element that, in view of the category of situations on which these techniques have been tested and which have helped devising these techniques, it is expected that statistically, scaling the tuned parameters as discussed and/or modifying the QA optimiser as discussed would on average provide better results on most cases for field services scheduling. It may be that these techniques may not achieve the same results when looking at different types of situation based on NP-complete and NP-hard problems, for which the behaviour of a QA optimiser may be different. On the other hand, being able to identify one or more tuning techniques which -on average- are expected to improve the results of a QA-based optimiser for optimising sets of data in the field services scheduling area, can be very useful at least to this industry.

Generally, there has been provided techniques for deriving tuned parameters for optimising a subject set of data based on tuned parameters for optimising a reference set of data for a QA-based optimisation of the subject set of data. In effect, it is expected that the steps to derive the values for the tuned subject parameters will be significantly less resource consuming that the steps that would otherwise be involved for identifying tuned parameters for the subject set of data based on the subject set of data only. As a result, a (resource-consuming) tuning method may only be used once for a reference set of data and the outcome of the tuning method can then be re-used to tune the QA-based optimiser to optimise new sets of data.

Generally, the optimisations discussed herein are effectively about organising and associating data from a set of data (in particular data describing one or more tasks, a workforce and one or more time periods for FSS) in an efficient manner. This provides incredible challenges as the organising and associating of the data has to be done within a certain perimeter given by constraints (e.g. hard or soft constraints, conflict avoidance in the allocation of task to the workforce in the time periods) and wherein the efficiency of the organised data is measured by a cost function. Additionally, the time and computing resources required to organise this data as efficiently as possible is also critical, especially in view of the complexity (NP-complete and NP-hard) of the problems surrounding the organisation of this data and in view of the expectation that only a limited number of possible solutions for organising this data (amongst the universe of all possible solutions) can realistically be explored. In view of this, providing tuned parameters for improving the efficiency for organising and associating this data (in terms of success rate and/or time-/resource-consumption) can be paramount in providing arrangements which can operate using less time and/or using less resources and/or providing better optimisation results. By identifying tuned parameters' values which are expected statistically to improve the organising and associating of this data and due to the nature of the data and of the computer-based implementation, a computer or computer-based arrangement implementing the techniques provided herein is thus expected to improve the results and operations of the data management in the field services scheduling industry.

It is also noteworthy that while most of the techniques described herein have been tested on (capacitated or not) vehicle routing or scheduling, they are also expected to yield similar results with FSS. In particular, from the experience of the inventors in both vehicle routing and FSS optimisation, while the data representation and the implementation of the QA optimiser may present some challenges when changing from a vehicle routing situation to a FSS situation (due in particular to the very complex nature of FSS situations and to the number of factors involved in FSS compared to vehicle routing), the effect of the tuning of the parameters is expected to be transposable from vehicle routing to FSS situations. As a result, while most of the description is focussed on FSS and most of the examples are focussed on vehicle routing, the skilled person will understand that the teachings of the present invention are in respect of both vehicle routing and FSS.

Figures 18-19 are illustrations of example architectures for implementing an optimiser in accordance with an example of the present disclosure. In the example of Figure 18, the system comprises a storage unit 1800 which is configured to store at least task data 1801, worker/workforce data 1802 and constraint data 1803. The storage unit could for example be provided in a form of a database (e.g. on a dedicated server, on a distributed architecture, etc.) or in a memory section of a computing device which can be configured to carry out other non-storage or non-database related functions (and which may be related to the QA optimiser or not). When a schedule is to be defined based on data stored in the storage unit 1800, the relevant set of tasks, workers and constraints (1811, 1812 and 1813, respectively) can be communicated to the pre-processing unit 1810. The pre-processing unit may also be provided as on a standalone device or on a distributed device which, in some examples can be configured to carry out other pre-processing related functions (and which may be related to the QA optimiser or not). The pre-processing unit 1810 can take at least task data, worker data and constraint data as input and is configured to output a set of P replicas which is suitable for use by the optimiser 1820. For example, it can be configured to carry out the steps S801-S804 (and optionally S805) in the example method of Figure 8 and generate P replicas comprising P encodings for processing by the QA optimiser 1820. The data can be generated to have a special structure and/or content which is specifically adapted to the QA optimisation implementation of the optimiser 1820. For example, if the optimiser 1820 uses Boolean algebra to accelerate the calculations, the pre-processing unit may then output a set of P replicas comprising P Boolean encodings. Once the data set for the P replicas has been generated, it can be transmitted to the optimiser 1820 for identifying a feasible and suitable schedule. In some examples, the cost function 1822 will be already configured in the optimiser while, in other examples, the optimiser 1820 can receive the cost function 1822 to be used when optimising the set of P replicas as an input. The optimiser can then output the identified schedule 1831 as the result of the search for an optimiser schedule.

In the example of Figure 18, the storage unit 1800, the pre-processing unit 1810 and the optimiser 1820 have been provided as separate elements connected via a private and/or public network. For example, each of these elements may be implemented as logical and/or physical standalone elements which are configured to communicate with each other via the network. It is also noteworthy that this architecture could be a virtual architecture and could also or alternatively be a distributed architecture (e.g. on a cloud environment). In other examples, two or more of the storage unit 1800, pre-processing unit 1810 and optimiser 1820 can be provided on the same physical or logical element. For example, the pre-processing unit and optimiser may be provided on the same element while the storage database can be separate and for example be provided via a dedicated storage system.

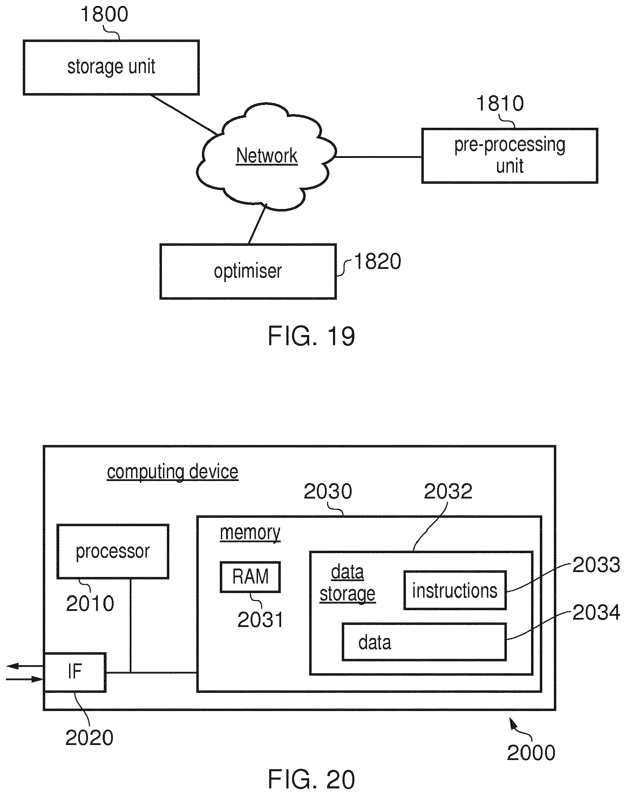

Figure 20 is an example of a computing device in accordance with an example of the present disclosure. The computing device 2000 comprises a processor 2010, e.g. one or more CPUs which may each have one or more cores. Processors, and computing hardware in general, is designed using binary logic and as such, some of the benefits discussed above can be provided by using this design feature of the computing hardware to accelerate the calculations by matching (e.g. as closely as possible) how computing is carried out at the hardware level. If appropriate (e.g. required for communicating with another computing device), the device 2000 can also include a network interface 2020 configured to exchange messages with other network interfaces. The processor 2010 and interface 2020 are also connected to each other and to a further memory element 2030. The memory 2030 can comprise different types of memory, e.g. volatile memory in the form or RAM 2031 and non-volatile memory 2032 used for data storage. For example memory 2032 could be provided in the form of a hard drive (HDD, SSD, etc.), of a memory card, of a USB pen, etc. The data storage memory 2032 can include data 2034 (e.g. variables used by a process, data sets, etc.) and can include instructions 2033 for carrying out tasks (e.g. a computer program). The instructions may be written in any suitable form, for example using one or more of a C++, Java, Python language. They may also be in a compiled or non-compiled form, as appropriate. In accordance with the teachings of the present invention, when a QA optimisation process is implemented using such an architecture, the speed and/or efficiency of the search for a schedule using this architecture can be increased.

As mentioned above, the implementation may involve one or a plurality of such computing devices (e.g. if different units are provided on different physical elements and/or if a distributed architecture is used). Also, in other examples, the processes discussed herein can be implemented using a more hardware-focussed approach. It could for example be implemented on specifically hard-coded hardware designed to carry out one or more of the relevant steps of the present disclosure and/or using programmable hardware (e.g. an FPGA circuit). As the computing hardware of such an arrangement will be based on the same principles as the processor or processing unit(s) of other computing devices, the benefits discussed above can also be derived using a more hardware-based implementation.

As previously discussed, by using the teachings of the present disclosure to dispatch drivers and/or members of a workforce in vehicles to visit one or more locations and/or to carry out one or more tasks, the fuel efficiency of the system for visiting the locations and/or for carrying out the tasks can thereby be improved. In effect, as it is quicker to obtain an optimised schedule, once a certain amount of time has been used to optimise the schedule, on average, a better schedule is expected to be obtained with the present disclosure compared to previously such that the vehicles will on average have to travel less to achieve the same results. The fuel efficiency of the fleet can thereby be improved and, likewise the fuel emissions resulting from carrying out the schedule can thereby be reduced.

Various aspects of the present disclosures are described in the following numbered clauses:

Clause 1. A method of identifying tuned parameter values for optimising a subject set of data based on tuned parameter values for optimising a reference set of data, each of the reference and subject sets of data being for defining a data combination by associating the data within the reference or subject set of data, respectively, the method comprising:

identifying reference values for a set of parameters by applying a quantum annealing optimisation procedure to the reference set of data using a plurality of sets of values for the set of parameters, the set of parameters including a magnetic field, a temperature and a number of replicas parameter;

identifying a reference peak cost difference corresponding to a maximum cost increase between a replaced replica and a corresponding accepted replica in accordance with a quantum annealing optimisation procedure applied to the reference set of data using the reference values for the set of parameters;

determining a scaling ratio based on a ratio of one or more of the reference values for the set of parameters and of the reference peak cost difference;

identifying a subject peak cost difference corresponding to a maximum cost increase between a replaced replica and a corresponding accepted replica in accordance with a quantum annealing optimisation procedure applied to the subject set of data using the reference values for the set of parameters;

carrying out a tuned quantum annealing optimisation procedure for the subject set of data using tuned values for the set of parameters, wherein:

the tuned value for the temperature parameter is based on the scaling ratio and on the subject peak cost difference;

the tuned value for the magnetic field parameter is based on the reference value for the magnetic field parameter;

the tuned value for the number of replicas parameter is equal to or more than the reference value for the number of replicas parameter; and

the tuned quantum annealing optimisation procedure is configured such that the quantum coupling term is constant throughout the tuned quantum annealing optimisation procedure and is calculated based on the tuned values for the set of parameters.

Clause 2. A method according to Clause 1 wherein, for each of the reference and subject sets of data:

the set of data comprises vehicle data identifying a fleet of one or more vehicles; driver data identifying one or more drivers; and location data defining one or more locations to be visited; and

a data combination associating the data within the set of data defines one or more routes wherein, for each of the one or more routes, a vehicle of the one or more vehicles is associated with at least one of the one or more drivers and with a sequence of at least one of the one or more locations to be visited by the vehicle.

Clause 3. A method according to Clause 1 wherein, for each of the reference and subject sets of data:

the set of data comprises workforce data identifying one or more workers; time period data defining one or more time periods and task data defining one or more tasks to be carried out; and
a data combination associating the data within the set of data defines associations between the workforce, time period and task data allocating, for at least one of the one or more time periods, at least one of the one or more workers to at least one of the one or more tasks

Clause 4. The method of any preceding Clause wherein the quantum annealing optimisation procedure applied to the reference set of data using the reference values for the set of parameters is the same quantum annealing optimisation procedure as the quantum annealing optimisation procedure applied to the reference set of data using a plurality of sets of values for the set of parameters.

Clause 5. The method of any preceding Clause wherein identifying the reference peak cost difference comprises identifying, as the reference peak cost difference, the maximum value for each instance of a cost increase between a replaced replica and a corresponding accepted replica in accordance with the quantum annealing optimisation procedure applied to the reference set of data using the reference values for the set of parameters.

Clause 6. The method of any of Clauses 1 to 4, wherein identifying the subject peak cost difference comprises identifying a maximum value for the lower nth percentile of the set of cost difference values comprising the cost difference value for each instance of a cost increase between a replaced replica and a corresponding accepted replica in accordance with the quantum annealing optimisation procedure applied to the reference set of data using the reference values for the set of parameters, wherein n is selected as one or more of: 80, 85, 90, 95, 98, or less than or equal to 99.

Clause 7. The method of any preceding Clause wherein identifying the subject peak cost difference comprises:

identifying a maximum value amongst a set of subject cost increases

wherein the set of subject cost increases is selected as cost increases smaller than or equal to the reference peak cost difference multiplied by a factor, from all instances of cost increase between a replaced replica and a corresponding accepted replica in accordance with the quantum annealing optimisation procedure applied to the reference set of data using the reference values for the set of parameters.

Clause 8. The method of Clause 7 wherein the factor is one or more of: 0.5; 0.75; 1; 2; less than or equal to 1; and less than or equal to 0.5.

Clause 9. The method of any preceding Clause wherein the scaling ratio is selected as the reference value for the number of replicas parameter multiplied by the reference value for the temperature parameter and divided by the reference peak cost difference.

Clause 10. The method of any preceding Clause wherein the tuned value for the temperature parameter is selected as the scaling ratio multiplied by the subject peak cost difference.

Clause 11. The method of Clause 10, wherein the tuned value for the number of replicas parameter is selected to greater than and not equal to the reference value for the number of replicas parameter.

Clause 12. The method of Clause 10 or 11, wherein the tuned quantum annealing optimisation procedure is configured such that, in a Hamiltonian calculation for determining whether to replace a first replica with a second replica, a difference in costs between the first and second replicas is not averaged by the number of replicas parameter.

Clause 13. The method of any of Clauses 1 to 9 wherein the tuned value for the temperature parameter is selected as the scaling ratio multiplied by the subject peak cost difference and divided by the tuned value for the number of replicas parameters.

Clause 14. A computer readable medium having stored thereon instructions for identifying tuned parameter values for optimising a subject set of data based on tuned parameter values for optimising a reference set of data, each of the reference and subject sets of data being for defining a data combination by associating the data within the reference or subject set of data, respectively, the medium comprising machine executable code which when executed by a processor, causes the processor to perform steps to and that comprise:

identify reference values for a set of parameters by applying a quantum annealing optimisation procedure to the reference set of data using a plurality of sets of values for the set of parameters, the set of parameters including a magnetic field, a temperature and a number of replicas parameter;

identify a reference peak cost difference corresponding to a maximum cost increase between a replaced replica and a corresponding accepted replica in accordance with a quantum annealing optimisation procedure applied to the reference set of data using the reference values for the set of parameters;

determine a scaling ratio based on a ratio of one or more of the reference values for the set of parameters and of the reference peak cost difference;

identify a subject peak cost difference corresponding to a maximum cost increase between a replaced replica and a corresponding accepted replica in accordance with a quantum annealing optimisation procedure applied to the subject set of data using the reference values for the set of parameters;

carry out a tuned quantum annealing optimisation procedure for the subject set of data using tuned values for the set of parameters, wherein:

the tuned value for the temperature parameter is based on the scaling ratio and on the subject peak cost difference;

the tuned value for the magnetic field parameter is based on the reference value for the magnetic field parameter;

the tuned value for the number of replicas parameter is equal to or more than the reference value for the number of replicas parameter; and

the tuned quantum annealing optimisation procedure is configured such that the quantum coupling term is constant throughout the tuned quantum annealing optimisation procedure and is calculated based on the tuned values for the set of parameters.

Clause 15. A computer readable medium having stored thereon instructions for identifying tuned parameter values for optimising a subject set of data based on tuned parameter values for optimising a reference set of data, each of the reference and subject sets of data being for defining a data combination by associating the data within the reference or subject set of data, respectively, the medium comprising machine executable code which when executed by a processor, causes the processor to perform steps according to any of Clauses 1 to 13.

Clause 16. A process optimisation computing device, comprising:

one or more processors;

a memory coupled to the one or more processors which are configured to be capable of executing programmed instructions stored in the memory to and that comprise:

identify a reference peak cost difference corresponding to a maximum cost increase between a replaced replica and a corresponding accepted replica in accordance with a quantum annealing optimisation procedure applied to the reference set of data using the reference values for the set of parameters;

determine a scaling ratio based on a ratio of one or more of the reference values for the set of parameters and of the reference peak cost difference;

identify a subject peak cost difference corresponding to a maximum cost increase between a replaced replica and a corresponding accepted replica in accordance with a quantum annealing optimisation procedure applied to the subject set of data using the reference values for the set of parameters;

carry out a tuned quantum annealing optimisation procedure for the subject set of data using tuned values for the set of parameters, wherein:

the tuned value for the temperature parameter is based on the scaling ratio and on the subject peak cost difference;

the tuned value for the magnetic field parameter is based on the reference value for the magnetic field parameter;

the tuned value for the number of replicas parameter is equal to or more than the reference value for the number of replicas parameter; and

the tuned quantum annealing optimisation procedure is configured such that the quantum coupling term is constant throughout the tuned quantum annealing optimisation procedure and is calculated based on the tuned values for the set of parameters.

Clause 17. A process optimisation computing device, comprising:

one or more processors;

a memory coupled to the one or more processors which are configured to be capable of executing programmed instructions stored in the memory to and which are for performing the method of any of Clauses 1 to 13.

## EP 3 173 984 A1

Clause 18. A computer program configured to perform, when executed, the method of any of Clauses 1 to 13.

**References**

[1] "Quantum annealing algorithm for vehicle scheduling" by Alan Crispin and Alex Syrichas (IEEE International Conference on Systems, Man, and Cybernetics, 13-16 Oct. 2013, pages 3523 - 3528)

[2] "Brief description on the state of the art of some local optimization methods: Quantum annealing" by Alfonso de la Fuente Ruiz (21 pages, April 2014)

[3] "Tuning an algorithm using design of experiments" by E. Ridge and D. Kudenko, Experimental methods for the analysis of optimization algorithms, pp. 265-286, 2010

[4] "Quantum Annealing of the graph colouring problem" by O. Titiloye and A. Crispin, Discrete Optimization, vol. 8, no. 2, pp. 376-384, 2011

**Claims**

1. A method of identifying tuned parameter values for optimising a subject set of data based on tuned parameter values for optimising a reference set of data, each of the reference and subject sets of data being for defining a data combination by associating the data within the reference or subject set of data, respectively, the method comprising:

   identifying reference values for a set of parameters by applying a quantum annealing optimisation procedure to the reference set of data using a plurality of sets of values for the set of parameters, the set of parameters including a magnetic field, a temperature and a number of replicas parameter;
   identifying a reference peak cost difference corresponding to a maximum cost increase between a replaced replica and a corresponding accepted replica in accordance with a quantum annealing optimisation procedure applied to the reference set of data using the reference values for the set of parameters;
   determining a scaling ratio based on a ratio of one or more of the reference values for the set of parameters and of the reference peak cost difference;
   identifying a subject peak cost difference corresponding to a maximum cost increase between a replaced replica and a corresponding accepted replica in accordance with a quantum annealing optimisation procedure applied to the subject set of data using the reference values for the set of parameters;
   carrying out a tuned quantum annealing optimisation procedure for the subject set of data using tuned values for the set of parameters, wherein:

      the tuned value for the temperature parameter is based on the scaling ratio and on the subject peak cost difference;
      the tuned value for the magnetic field parameter is based on the reference value for the magnetic field parameter;
      the tuned value for the number of replicas parameter is equal to or more than the reference value for the number of replicas parameter; and
      the tuned quantum annealing optimisation procedure is configured such that the quantum coupling term is constant throughout the tuned quantum annealing optimisation procedure and is calculated based on the tuned values for the set of parameters.

2. A method according to claim 1 wherein, for each of the reference and subject sets of data:

   the set of data comprises vehicle data identifying a fleet of one or more vehicles; driver data identifying one or more drivers; and location data defining one or more locations to be visited; and
   a data combination associating the data within the set of data defines one or more routes wherein, for each of the one or more routes, a vehicle of the one or more vehicles is associated with at least one of the one or more drivers and with a sequence of at least one of the one or more locations to be visited by the vehicle.

3. A method according to claim 1 wherein, for each of the reference and subject sets of data:

the set of data comprises workforce data identifying one or more workers; time period data defining one or more time periods and task data defining one or more tasks to be carried out; and

a data combination associating the data within the set of data defines associations between the workforce, time period and task data allocating, for at least one of the one or more time periods, at least one of the one or more workers to at least one of the one or more tasks

4.  The method of any preceding claim wherein the quantum annealing optimisation procedure applied to the reference set of data using the reference values for the set of parameters is the same quantum annealing optimisation procedure as the quantum annealing optimisation procedure applied to the reference set of data using a plurality of sets of values for the set of parameters.

5.  The method of any preceding claim wherein
    identifying the reference peak cost difference comprises identifying, as the reference peak cost difference, the maximum value for each instance of a cost increase between a replaced replica and a corresponding accepted replica in accordance with the quantum annealing optimisation procedure applied to the reference set of data using the reference values for the set of parameters; or
    identifying the subject peak cost difference comprises identifying a maximum value for the lower nth percentile of the set of cost difference values comprising the cost difference value for each instance of a cost increase between a replaced replica and a corresponding accepted replica in accordance with the quantum annealing optimisation procedure applied to the reference set of data using the reference values for the set of parameters, wherein n is selected as one or more of: 80, 85, 90, 95, 98, or less than or equal to 99.

6.  The method of any preceding claim wherein identifying the subject peak cost difference comprises:

    identifying a maximum value amongst a set of subject cost increases
    wherein the set of subject cost increases is selected as cost increases smaller than or equal to the reference peak cost difference multiplied by a factor, from all instances of cost increase between a replaced replica and a corresponding accepted replica in accordance with the quantum annealing optimisation procedure applied to the reference set of data using the reference values for the set of parameters
    wherein, optionally, the factor is one or more of: 0.5; 0.75; 1; 2; less than or equal to 1; and less than or equal to 0.5.

7.  The method of any preceding claim wherein the scaling ratio is selected as the reference value for the number of replicas parameter multiplied by the reference value for the temperature parameter and divided by the reference peak cost difference.

8.  The method of any preceding claim wherein the tuned value for the temperature parameter is selected as the scaling ratio multiplied by the subject peak cost difference, wherein, optionally, the tuned value for the number of replicas parameter is selected to greater than and not equal to the reference value for the number of replicas parameter.

9.  The method of claim 8, wherein the tuned quantum annealing optimisation procedure is configured such that, in a Hamiltonian calculation for determining whether to replace a first replica with a second replica, a difference in costs between the first and second replicas is not averaged by the number of replicas parameter.

10. The method of any of claims 1 to 7 wherein the tuned value for the temperature parameter is selected as the scaling ratio multiplied by the subject peak cost difference and divided by the tuned value for the number of replicas parameters.

11. A method of dispatching drivers, the method comprising
    identifying a first fleet of one or more vehicles; first one or more drivers; and first one or more locations to be visited;
    generating a first set of data comprising vehicle data representing the first fleet of one or more vehicles; driver data representing the first one or more drivers; and location data representing the first one or more locations to be visited;
    identifying a second fleet of one or more vehicles; second one or more drivers; and second one or more locations to be visited;
    generating a second set of data comprising vehicle data representing the second fleet of one or more vehicles; driver data representing the second one or more drivers; and location data representing the second one or more locations to be visited;
    identifying a set of tuned parameter values for optimising the second set of data based on tuned parameter values for optimising the first set of data using the method of any of claims 1 to 10, wherein carrying out the tuned quantum annealing optimisation procedure for the second set of data comprises outputting an optimised data combination associating data within the second set of data; and

dispatching the second one or more drivers, using the second fleet of one or more vehicles and to the one or more locations based on the output optimised data combination for the second set of data.

**12.** A computer readable medium having stored thereon instructions for identifying tuned parameter values for optimising a subject set of data based on tuned parameter values for optimising a reference set of data, each of the reference and subject sets of data being for defining a data combination by associating the data within the reference or subject set of data, respectively, the medium comprising machine executable code which when executed by a processor, causes the processor to perform steps according to any of claims 1 to 10.

**13.** A process optimisation computing device, comprising:

one or more processors;
a memory coupled to the one or more processors which are configured to be capable of executing programmed instructions stored in the memory to and that comprise:

identify a reference peak cost difference corresponding to a maximum cost increase between a replaced replica and a corresponding accepted replica in accordance with a quantum annealing optimisation procedure applied to the reference set of data using the reference values for the set of parameters;
determine a scaling ratio based on a ratio of one or more of the reference values for the set of parameters and of the reference peak cost difference;
identify a subject peak cost difference corresponding to a maximum cost increase between a replaced replica and a corresponding accepted replica in accordance with a quantum annealing optimisation procedure applied to the subject set of data using the reference values for the set of parameters;
carry out a tuned quantum annealing optimisation procedure for the subject set of data using tuned values for the set of parameters, wherein:

the tuned value for the temperature parameter is based on the scaling ratio and on the subject peak cost difference;
the tuned value for the magnetic field parameter is based on the reference value for the magnetic field parameter;
the tuned value for the number of replicas parameter is equal to or more than the reference value for the number of replicas parameter; and
the tuned quantum annealing optimisation procedure is configured such that the quantum coupling term is constant throughout the tuned quantum annealing optimisation procedure and is calculated based on the tuned values for the set of parameters.

**14.** A process optimisation computing device, comprising:

one or more processors;
a memory coupled to the one or more processors which are configured to be capable of executing programmed instructions stored in the memory to and which are for performing the method of any of claims 1 to 10.

**15.** A computer program configured to perform, when executed, the method of any of claims 1 to 11.

**Replica n**

101 — Schedule n (Field Service)

102 — Boolean encoding n (transformed schedule)

103 — Other attributes n

100

**FIG. 1**

200

| Encoding scheme (binary) | Schedule (busy=1) | | | | | Hard constraints (violation=0) | | | | | Soft constraints (violation=0) | | | | | Schedule conflicts (violation=0) | | | | | Job assignments (assigned=1) | | | | | Possible extensions | | | |
|---|---|---|---|---|---|---|---|---|---|---|---|---|---|---|---|---|---|---|---|---|---|---|---|---|---|---|---|---|---|
| | $t_0$ | $t_1$ | $t_2$ | $t_3$ | ...... | $t_N$ | $h_0$ | $h_1$ | $h_2$ | $h_3$ | ...... | $h_N$ | $s_0$ | $s_1$ | $s_2$ | $s_3$ | ...... | $s_N$ | $t_0$ | $t_1$ | $t_2$ | $t_3$ | ...... | $t_N$ | $j_0$ | $j_1$ | $j_2$ | $j_3$ | ...... | $j_N$ | $z_0$ | $z_1$ | $z_2$ | $z_3$ | ...... | $z_N$ |
| Service technicians $O_0$ | | | | | | | | | | | | | | | | | | | | | | | | | | | | | | | | | | | | |
| $O_1$ | | | | | | | | | | | | | | | | | | | | | | | | | | | | | | | | | | | | |
| $O_2$ | | | | | | | | | | | | | | | | | | | | | | | | | | | | | | | | | | | | |
| $O_3$ | | | | | | | | | | | | | | | | | | | | | | | | | | | | | | | | | | | | |
| ......... | | | | | | | | | | | | | | | | | | | | | | | | | | | | | | | | | | | | |
| $O_N$ | | | | | | | | | | | | | | | | | | | | | | | | | | | | | | | | | | | | |

**FIG. 2**

EP 3 173 984 A1

**FIG. 3** (300)

| Service Technicians | Skills | Location |
|---|---|---|
| $O_0$ | A | $L_A$ |
| $O_1$ | ABC | $L_B$ |
| $O_2$ | CD | $L_C$ |
| $O_3$ | ABCD | $L_D$ |

FIG. 3

**FIG. 4** (400) (410)

| Hard constraint | Description |
|---|---|
| $h_0$ | Start on time |
| $h_1$ | Correct skills |

| Soft constraint | Description |
|---|---|
| $s_0$ | Overtime |
| $s_1$ | Location |

FIG. 4

**FIG. 5** (500)

| Job | Start period | Duration | Required Skills | Location |
|---|---|---|---|---|
| $j_0$ | 0 | 2 | A | $L_A$ |
| $j_1$ | 1 | 1 | AB | $L_A$ |
| $j_2$ | 1 | 3 | B | $L_D$ |
| $j_3$ | 2 | 2 | C | $L_C$ |

FIG. 5

**FIG. 6** (200)

| | $t_0$ | $t_1$ | $t_2$ | $t_3$ | $h_0$ | $h_1$ | $s_0$ | $s_1$ | $t_0$ | $t_1$ | $t_2$ | $t_3$ | $j_0$ | $j_1$ | $j_2$ | $j_3$ | Hexadecimal (64 bits) |
|---|---|---|---|---|---|---|---|---|---|---|---|---|---|---|---|---|---|
| $O_0$ | 1 | 1 | 0 | 0 | 1 | 1 | 1 | 1 | 1 | 1 | 1 | 1 | 1 | 0 | 0 | 0 | 000000000000CFF8 |
| $O_1$ | 0 | 1 | 0 | 0 | 1 | 1 | 1 | 0 | 1 | 1 | 1 | 1 | 0 | 1 | 0 | 0 | 0000000000004EF4 |
| $O_2$ | 0 | 0 | 1 | 1 | 1 | 1 | 1 | 1 | 1 | 1 | 1 | 1 | 0 | 0 | 0 | 1 | 0000000000003FF1 |
| $O_3$ | 0 | 1 | 1 | 1 | 1 | 1 | 1 | 0 | 1 | 1 | 1 | 1 | 0 | 0 | 1 | 0 | 0000000000007EF2 |

FIG. 6

Encoding, replica P

Schedule | Hard constraints | Soft constraints | Schedule conflicts | Job assignments

200p

Schedule | Hard constraints | Soft constraints | Schedule conflicts | Job assignments

200n

Encoding, replica 2

Interact

Schedule | Hard constraints | Soft constraints | Schedule conflicts | Job assignments

200₂

Interact

Schedule | Hard constraints | Soft constraints | Schedule conflicts | Job assignments

200₁

Encoding, replica 1

FIG. 7

| 5801 | 5802 | 5803 | 5804 | 5805 | 5806 |
|------|------|------|------|------|------|
| **Input schedule** | **Create circular list:** replicate schedule *P* times | **Diffentiate:** apply operator/s to each replica | **Transform:** apply encoding scheme to each replica | **Set control parameters** | **Run *Quantum Optimizer*** |

FIG. 8

EP 3 173 984 A1

FIG. 10

S902

- S1001: current = first replica
- S1002: candidate = *Reformulate*(current)
- S1003: $Q_0$ = *Interact* (previous, current) + *Interact* (current, next)
- S1004: $Q_1$ = *Interact* (previous, candidate) + *Interact* (candidate, next)
- S1005: $E_K = Q_1 - Q_0$
- S1006: $E_p$ = *Cost* (candidate) - *Cost* (current)
- S1007: *Accept* ($E_p$, $E_K$)
- S1008: Final
- S1009: current = next replica
- Return

FIG. 9

S806

- S901: $J_\Gamma = (-T/2) \ln \tanh (\Gamma/PT)$
- S902: *Integrate*
- S903: $\Gamma = \Gamma - \Delta\Gamma$
- S904: $M_C = M_C - 1$
- S905: $M_C = 0$ ?
- S906: Return best

FIG. 11

START

Identify reference values $\{\Gamma_{ref}, P_{ref}, T_{ref}\}$ with a QA optimisation for first data DATA1 ⎯S1201

Identify a peak cost difference $\Delta E_{ref}$ for a QA optimisation of DATA1 using $\{\Gamma_{ref}, P_{ref}, T_{ref}\}$ ⎯S1202

Identify reference ratio k from $\Delta E_{ref}$ and from one or more of $\{\Gamma_{ref}, P_{ref}, T_{ref}\}$ ⎯S1203

Identify a peak cost difference $\Delta E_{subj}$ for a QA optimisation of second data DATA2 using $\{\Gamma_{ref}, P_{ref}, T_{ref}\}$ ⎯S1204

Carrying a modified QA optimisation for DATA2 using $\{\Gamma_{subj}, P_{subj}, T_{subj}\}$, with $T_{subi}$ based on k and $\Delta E_{subj}$; $\Gamma_{subi}$, based on $\Gamma_{ref}$; and $P_{subi} \geq P_{ref}$ ⎯S1205

END

FIG. 12

FIG. 13

Accepted fitness cloud for P-n101-k4, optimal 681

FIG. 14

| | cost(s) | cost(s') | ΔE |
|---|---|---|---|
| 1 | 3573 | 3523 | -50 |
| 2 | 3296 | 3284 | -12 |
| 3 | 3362 | 3336 | -26 |
| 4 | 3464 | 3456 | -8 |
| 5 | 3857 | 3850 | -7 |
| 6 | 4044 | 3995 | -49 |
| 7 | 3319 | 3320 | 1 |
| 8 | 3472 | 3471 | -1 |
| 9 | 3484 | 3410 | -74 |
| 10 | 3360 | 3358 | -2 |
| 11 | 3616 | 3593 | -23 |
| 12 | 3775 | 3740 | -35 |
| 13 | 3680 | 3668 | -12 |
| 14 | 3426 | 3404 | -22 |
| 15 | 3725 | 3714 | -11 |
| 16 | 3633 | 3630 | -3 |
| 17 | 3625 | 3624 | -1 |
| 18 | 3777 | 3757 | -20 |
| 19 | 3826 | 3797 | -29 |
| 20 | 2967 | 2954 | -13 |
| 21 | 2874 | 2835 | -39 |
| 22 | 3178 | 3170 | -8 |
| 23 | 3134 | 3128 | -6 |
| 24 | 2931 | 2907 | -24 |
| 25 | 3171 | 3158 | -13 |

| | cost(s) | cost(s') | ΔE |
|---|---|---|---|
| 151 | 741 | 743 | 2 |
| 152 | 765 | 764 | -1 |
| 153 | 736 | 735 | -1 |
| 154 | 749 | 746 | -3 |
| 155 | 751 | 749 | -2 |
| 156 | 700 | 704 | 4 |
| 157 | 725 | 724 | -1 |
| 158 | 744 | 746 | 2 |
| 159 | 700 | 701 | 1 |
| 160 | 721 | 720 | -1 |
| 161 | 752 | 750 | -2 |
| 162 | 755 | 757 | 2 |
| 163 | 718 | 717 | -1 |
| 164 | 744 | 743 | -1 |
| 165 | 716 | 714 | -2 |
| 166 | 736 | 738 | 2 |
| 167 | 712 | 715 | 3 |
| 168 | 711 | 710 | -1 |
| 169 | 728 | 727 | -1 |
| 170 | 751 | 750 | -1 |
| 171 | 743 | 744 | 1 |
| 172 | 709 | 710 | 1 |
| 173 | 706 | 701 | -5 |
| 174 | 750 | 751 | 1 |
| 175 | 712 | 714 | 2 |

| | cost(s) | cost(s') | ΔE |
|---|---|---|---|
| 301 | 694 | 696 | 2 |
| 302 | 726 | 728 | 2 |
| 303 | 698 | 692 | -6 |
| 304 | 717 | 713 | -4 |
| 305 | 690 | 689 | -1 |
| 306 | 693 | 690 | -3 |
| 307 | 704 | 706 | 2 |
| 308 | 696 | 698 | 2 |
| 309 | 727 | 725 | -2 |
| 310 | 716 | 718 | 2 |
| 311 | 694 | 687 | -7 |
| 312 | 723 | 722 | -1 |
| 313 | 723 | 726 | 3 |
| 314 | 720 | 722 | 2 |
| 315 | 744 | 742 | -2 |
| 316 | 742 | 743 | 1 |
| 317 | 731 | 734 | 3 |
| 318 | 692 | 693 | 1 |
| 319 | 729 | 727 | -2 |
| 320 | 738 | 739 | 1 |
| 321 | 691 | 690 | -1 |
| 322 | 712 | 711 | -1 |
| 323 | 702 | 703 | 1 |
| 324 | 700 | 699 | -1 |
| 325 | 708 | 714 | 6 |

| | cost(s) | cost(s') | ΔE |
|---|---|---|---|
| 451 | 689 | 690 | 1 |
| 452 | 699 | 695 | -4 |
| 453 | 709 | 702 | -7 |
| 454 | 704 | 701 | -3 |
| 455 | 712 | 708 | -4 |
| 456 | 701 | 705 | 4 |
| 457 | 685 | 684 | -1 |
| 458 | 706 | 702 | -4 |
| 459 | 684 | 686 | 2 |
| 460 | 687 | 691 | 4 |
| 461 | 712 | 710 | -2 |
| 462 | 681 | 685 | 4 |
| 463 | 689 | 687 | -2 |
| 464 | 688 | 692 | 4 |
| 465 | 698 | 694 | -4 |
| 466 | 698 | 703 | 5 |
| 467 | 687 | 690 | 3 |
| 468 | 696 | 692 | -4 |
| 469 | 707 | 700 | -7 |
| 470 | 703 | 698 | -5 |
| 471 | 702 | 697 | -5 |
| 472 | 694 | 689 | -5 |
| 473 | 714 | 713 | -1 |
| 474 | 711 | 708 | -3 |
| 475 | 714 | 710 | -4 |

FIG. 15

Start

current = first replica

candidate = **Reformulate**(current)

$Q_0$ = **Bijection** (previous, current) + **Bijection** (current, next)

$Q_1$ = **Bijection** (previous, candidate) + **Bijection** (candidate, next)

$E_K = Q_1 - Q_0$

$E_p$ = **Cost** (candidate) - **Cost** (current)

**Accept** ($E_p$, $E_K$)

Final replica ?

N → current = next replica

Y → Return

FIG. 16B

Start

*Integrate*

$M_c = M_c - 1$

$M_c = 0$ ?

N

Y → Return best schedule

FIG. 16A

## FIG. 16C

```
          ( Start )
              │
              ▼
    ┌─────────────────────┐
    │  Duplicate schedule  │
    │  of current replica  │
    └─────────────────────┘
              │
              ▼
    ┌─────────────────────────┐
    │ Randomly choose an operator │
    └─────────────────────────┘
              │
              ▼
    ┌─────────────────────┐
    │  Apply operator to the │
    │  duplicate schedule  │
    └─────────────────────┘
              │
              ▼
    ┌──────────────────────────────┐
    │ Create candidate replica: apply encoding │
    │  scheme to duplicated schedule │
    └──────────────────────────────┘
              │
              ▼
          ( Return )
```

**FIG. 16C**

## FIG. 16D

```
                    ( Start )
                        │
                        ▼
              ┌──────────────────┐
              │   Set Q to zero   │
              └──────────────────┘
                        │
                        ▼
              ┌──────────────────────┐
              │ A = first word of encoding │
              │      in replica 1      │
              └──────────────────────┘
                        │
                        ▼
              ┌──────────────────────┐
              │ B = first word of encoding │
              │      in replica 2      │
              └──────────────────────┘
                        │
                        ▼
              ┌──────────────┐
              │  C = A XOR B  │
              └──────────────┘
                        │
                        ▼
              ┌────────────────────────────┐
              │ Q = Q - (Hamming Weight of C) │
              └────────────────────────────┘
                        │
                        ▼
              ┌──────────────┐
              │  D = NOT C   │
              └──────────────┘
                        │
                        ▼
              ┌────────────────────────────┐
              │ Q = Q + (Hamming Weight of D) │
              └────────────────────────────┘
                        │
                        ▼
                  ╱ Last word  ╲
             N ◄──╲ of encoding ╱
                  ╲     ?      ╱
                        │ Y
                        ▼
                  ( Return Q )
```

Loop back:
B = next word of encoding in replica 2
A = next word of encoding in replica 1

**FIG. 16D**

```
                    ┌─────────────┐
                    │    Start    │
                    └──────┬──────┘
                           │
                           ▼
                      ╱─────────╲         Y
                     ╱  Eₚ ≤ 0 ? ╲──────────────────┐
                     ╲           ╱                   │
                      ╲─────────╱                    │
                           │ N                       │
                           ▼                         │
              ┌──────────────────────────┐          │
              │   H = (Eₚ/P) + JᵣEₖ       │          │
              └────────────┬─────────────┘          │
                           │                         │
                           ▼                         │
                      ╱─────────╲         Y          │
                     ╱   H ≤ 0 ?  ╲──────────────────┤
                     ╲           ╱                   │
                      ╲─────────╱                    │
                           │ N                       │
                           ▼                         │
              ┌──────────────────────────┐          │
              │   R = Random {0,1}        │          │
              └────────────┬─────────────┘          │
                           │                         │
                           ▼                         ▼
                      ╱─────────╲    Y   ┌────────────────────────┐
                     ╱ R < e(-H/T)?╲────▶│  Replace current with  │
                     ╲           ╱       │   candidate replica    │
                      ╲─────────╱        └───────────┬────────────┘
                           │ N                       │
                           ▼                         │
                    ┌─────────────┐                  │
                    │   Return    │◀─────────────────┘
                    └─────────────┘
```

$$H = (E_\text{P}/P) + J_\Gamma E_K$$

$$R = \text{Random } \{0,1\}$$

$$R < e^{(-H/T)} ?$$

# FIG. 16E

FIG. 17

FIG. 18

1800

storage unit

Network

1810

pre-processing unit

optimiser

1820

FIG. 19

computing device

2030          2032

memory

processor

RAM

data storage

instructions

2033

2010

data

2034

2031

IF

2020

2000

FIG. 20

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CRISPIN ALAN ET AL: "Quantum Annealing Algorithm for Vehicle Scheduling", 2013 IEEE INTERNATIONAL CONFERENCE ON SYSTEMS, MAN, AND CYBERNETICS, IEEE, 13 October 2013 (2013-10-13), pages 3523-3528, XP032557130, DOI: 10.1109/SMC.2013.601 [retrieved on 2014-01-24] * the whole document * | 1-15 | INV. G06N99/00 |
| Y | WO 2009/152180 A2 (DWAVE SYS INC [CA]; AMIN MOHAMMAD [CA]; COURY MICHAEL [CA]) 17 December 2009 (2009-12-17) * abstract * * figures 2, 3, 6 * * page 37, line 25 - page 49, line 23 * * page 54, line 28 - page 58, line 2 * | 1-15 | |

TECHNICAL FIELDS
SEARCHED (IPC)

G06N
G06Q

The present search report has been drawn up for all claims

| Place of search | Date of completion of the search | Examiner |
|---|---|---|
| The Hague | 24 April 2017 | Ronke, Rebecca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 9404

This annex lists the patent family members relating to the patent documents cited in  the above-mentioned European search report.
The members are as contained in the European Patent Office EDP file on
The European Patent Office is in no way liable for these particulars which are merely given for the purpose of information.

24-04-2017

| Patent document cited in search report | | Publication date | Patent family member(s) | | Publication date |
|---|---|---|---|---|---|
| WO 2009152180 | A2 | 17-12-2009 | US 2011060710 | A1 | 10-03-2011 |
| | | | US 2012254586 | A1 | 04-10-2012 |
| | | | WO 2009152180 | A2 | 17-12-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1515317 A
- GB 1515318 A
- GB 1515319 A

### Non-patent literature cited in the description

- **ALAN CRISPIN ; ALEX SYRICHAS.** Quantum annealing algorithm for vehicle scheduling. *IEEE International Conference on Systems, Man, and Cybernetics,* 13 October 2013, 3523-3528
- **ALFONSO DE LA FUENTE RUIZ.** *Brief description on the state of the art of some local optimization methods: Quantum annealing,* April 2014, vol. 21
- **E. RIDGE ; D. KUDENKO.** Tuning an algorithm using design of experiments. *Experimental methods for the analysis of optimization algorithms,* 2010, 265-286
- **O. TITILOYE ; A. CRISPIN.** Quantum Annealing of the graph colouring problem. *Discrete Optimization,* 2011, vol. 8 (2), 376-384